Europäisches Patentamt

European Patent Office

Office européen des brevets

(11) Veröffentlichungsnummer: **0 515 991 B1**

(12) **EUROPÄISCHE PATENTSCHRIFT**

(45) Veröffentlichungstag der Patentschrift: **01.03.95**

(51) Int. Cl.6: **B60G 17/056**

(21) Anmeldenummer: **92108651.8**

(22) Anmeldetag: **22.05.92**

(54) **Federungssystem.**

(30) Priorität: **28.05.91 DE 4117455**
**07.09.91 DE 4129773**
**07.09.91 DE 4129819**

(43) Veröffentlichungstag der Anmeldung:
**02.12.92 Patentblatt 92/49**

(45) Bekanntmachung des Hinweises auf die
Patenterteilung:
**01.03.95 Patentblatt 95/09**

(84) Benannte Vertragsstaaten:
**BE DE ES FR GB IT NL SE**

(56) Entgegenhaltungen:
DE-A- 3 426 014          DE-A- 3 817 508
DE-A- 3 936 034          DE-C- 3 809 338
US-A- 4 270 771          US-A- 4 798 398

(73) Patentinhaber: **HEMSCHEIDT FAHRWERK-
TECHNIK GmbH & Co.
Bornberg 97
D-42109 Wuppertal (DE)**

(72) Erfinder: **Runkel, Walter, Dr.Dipl.-Ing.
Mendelssohnweg 30
W-5600 Wuppertal 2 (DE)**

(74) Vertreter: **Zapf, Christoph, Dipl.-Ing.
Patentanwälte Dr. Solf und Zapf
Postfach 13 01 13
D-42028 Wuppertal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

EP 0 515 991 B1

**Beschreibung**

Die vorliegende Erfindung betrifft ein Federungssystem insbesondere zur Radabstützung bei Kraftfahrzeugen, mit mindestens einem aus einem Zylinder und einem in diesem zum Ein- und Ausfedern beweglich geführten, von einem Hydraulikmedium, insbesondere einem Öl, beaufschlagten Kolben bestehenden Federbein. Vorzugsweise ist das Federungssystem hydropneumatisch ausgebildet, wobei das Hydraulikmedium beim Ein- und Ausfedern über eine hydraulische Verbindung zwischen dem Federbein und mindestens einem hydropneumatischen, ein kompressibles Medium enthaltenden Federspeicher hin- und herströmt, wobei der Federspeicher durch Kompression des kompressiblen Mediums einen hydraulischen Druck erzeugt, der in dem Federbein durch die Beaufschlagung des Kolbens eine Federkraft bewirkt.

Die Erfindung betrifft ferner auch ein Dämpfungsventil insbesondere zur Verwendung in einem Federungssystem der genannten Art.

Bei derartigen Federungssystemen wird durch die Ein- und Ausfederungsbewegungen des Kolbens das in dem Federbeim enthaltene Hydraulikmedium in Strömung versetzt. Beim Einfedern wird ein bestimmtes Volumen des Hydraulikmediums von dem Kolben aus dem Zylinder des Federbeins in mindestens ein/en Federspeicher verdrängt, wodurch sich das Volumen des in dem Federspeicher enhaltenen kompressiblen Mediums verringert. Durch diese Komprimierung wird ein Druckanstieg und damit eine Federwirkung hervorgerufen, die bei einem nachfolgenden Ausfedern eine Rückströmung des Hydraulikmediums aus dem Federspeicher in das Federbein bewirkt.

Bei den bekannten Federungssystemen ist nun aber nachteilig, daß beim Einfedern die Federkraft überproportional ansteigt, denn hierdurch wird das Federbeim beim Ausfedern sehr stark beschleunigt. In Fahrzeugen führt dieses Verhalten insofern zu Problemen, als beispielsweise in Fällen, in denen mit einem Rad eine Unebenheit, d.h. eine Erhebung, überfahren wird, das Rad nach der Erhebung sehr schnell nach unten bewegt wird, d.h. es schlägt auf die Fahrbahn zurück. Dies ist insbesondere bei schweren Lastkraftwagen zu beobachten, die hierdurch auf den Fahrbahnen Schäden verursachen, indem durch das ständige Überfahren der Unebenheiten durch viele Fahrzeuge nacheinander regelrechte Schlagloch-Serien entstehen. Ferner ist das beschriebene Verhalten insbesondere auch bei Kurvenfahrten nachteilig, da hierbei jeweils die auf der Kurvenaußenseite angeordneten Federbeine - bedingt durch die auftretende Fliehkraft - einfedern und auf der Kurveninnenseite ausfedern, wobei die ausfedernden Federbeine aufgrund der pneumatisch erzeugten Federkraft das Fahrzeug noch weiter zur Außenseite hinüberdrücken und so nachteiligerweise das Fahrzeug noch weiter neigen, als es allein durch die Fliehkraft erfolgen würde.

Nun ist es zwar ebenfalls bekannt, die beim Ausfedern auftretende Hydraulikströmung mittels geeigneter Dämpfungsventile zu drosseln. Die DE-A- 39 36 034 offenbart ein solches FEDERUNGSsystem, gemäß des Oberbegriffs des Auspruchs 1. Allerdings bringt dies noch keine zufriedenstellende Lösung der angesprochenen Probleme. Vielmehr treten hier sogar noch zusätzliche Probleme auf, da bekannte Dämpfungsventile auf dem "Strömungswiderstandsprinzip" beruhen, wobei bewußt Wirbel und Turbulenzen in der zu dämpfenden Strömung erzeugt werden, was aber zu einer insbesondere für hydropneumatische Systeme sehr nachteiligen Erwärmung des Hydraulikmediums führt. Denn die Wärme überträgt sich auf das pneumatische Medium, wodurch sich die Federkennlinie ändert. Zudem können durch die Turbulenzen insbesondere bei hohen Strömungsgeschwindigkeiten sogar schädliche Erosionserscheinungen auftreten.

Der vorliegenden Erfindung liegt daher die Aufgabe zugrunde, ein Federungssystem der gattungsgemäßen Art so zu verbessern, daß die beschriebenen Probleme auf besonders einfache und wirkungsvolle Weise vermieden werden können.

Erfindungsgemäß wird dies dadurch erreicht, daß beim Ausfedern des Federbeins innerhalb eines Dämpfungsventils ein Strömungsweg für das Hydraulikmedium ständig alternierend gesperrt und wieder geöffnet wird. Dies bedeutet, daß bei Auftreten einer Ausfederungsbewegung des Federbeins der Federspeicher zunächst einmal von dem Federbein "abgekoppelt" wird, so daß kein Hydraulikmedium mehr aus dem Federspeicher in das Federbein nachströmen kann. In dem Federbein ist dann ein bestimmtes Volumen des Hydraulikmediums eingeschlossen (gekammert), in welchem im ersten Moment noch der gleiche Druck wie im Federspeicher herrscht, wobei dieser Druck durch Beaufschlagung des Kolbens eine bestimmte Federkraft bzw. Tragkraft erzeugt. Die Erfindung beruht nun auf der Erkenntnis, daß aufgrund einer geringfügigen Kompressibilität des Hydraulikmediums trotz dessen Kammerung in dem Federbein eine geringfügige weitergehende Ausfederungsbewegung des Federbeins möglich ist, und daß hierdurch eine "Entspannung" des gekammerten Hydraulikmediums, d.h. ein rapider Druckabfall, auftritt, wodurch auch die Federkraft ebenso rapide abfällt. Das für die meisten Anwendungsfälle schädliche schnelle Nachschieben des Federbeins in Ausfederungsrichtung wird so wirksam verhindert. Es erfolgt nun erfindungsgemäß im weiteren Verlauf des Ausfederns ein gesteuertes, dosiertes, sukzessives "Nachlassen" von Hydraulikmedium aus dem Federspeicher in das Federbein hinein, indem die Verbindung zum Federspei-

2

cher ständig alternierend wieder hergestellt und wieder abgesperrt wird, bis die Ausfederungsbewegung ganz beendet ist. Hierdurch wird eine sehr schonende Ausfederung erreicht, während der erfindungsgemäß die als Kennlinie dargestellte Federkraft einen "zackenartigen", aus abfallenden und ansteigenden Flanken bestehenden Verlauf besitzt und dabei vorteilhafterweise mit ihrem Wert stets "unterhalb" einer "normalen" Federkennlinie eines nicht-erfindungsgemäßen Systems liegt.

Durch die Erfindung tritt somit bei abgesperrter, unterbrochener Verbindung zwischen dem Federbein und dem Federspeicher ein Zustand auf, in dem der innerhalb des Federbeins herrschende hydraulische Druck abfällt und daher kleiner wird als der zur gleichen Zeit in dem Federspeicher herrschende hydraulische Druck, da letzterer nämlich durch die Vorspannung bzw. Komprimierung des kompressiblen Mediums auf dem jeweiligen Wert aufrechterhalten wird. Es tritt folglich eine Druckdifferenz zwischen den Drücken des Federbeins und des Federspeichers auf.

In einer besonders vorteilhaften Ausführungsform der Erfindung wird nun diese Druckdifferenz dazu verwendet, um hiermit praktisch selbsttätig das alternierende Sperren und Öffnen der Verbindung zwischen Federbein und zugehörigem Federspeicher zu steuern. Hierzu ist erfindungsgemäß in der Verbindung ein Ausfederungsventil angeordnet, welches derart ausgebildet ist, daß es selbsttätig bei Druckgleichgewicht bzw. schon bei einer nur noch geringen Druckdifferenz schließt (sperrt) und bei zunehmender Druckdifferenz bei Erreichen eines insbesondere voreinstellbaren Differenzbetrages öffnet. Erfindungsgemäß wird hierdurch praktisch eine "Selbstunterbrechung" geschaffen, wobei im geschlossenen Zustand des Ausfederungsventils jeweils der hydraulische Druck des Federbeins aufgrund der Kompressibilität des Hydraulikmediums abfällt, bis die vorbestimmte Druckdifferenz erreicht ist. Dann öffnet das Ventil, so daß ein Druckausgleich über das geöffnete Ventil erfolgen kann, bis nur noch eine geringe, vorbestimmte Druckdifferenz oder sogar ein Druckgleichgewicht vorhanden ist und das Ventil hierdurch wieder schließt. In diesem Zustand sinkt der hydraulische Druck innerhalb des Federbeins wieder ab, und der beschriebene Vorgang wiederholt sich solange, bis die Ausfederungsbewegung beendet ist.

Erfindungsgemäß besitzt das Ausfederungsventil ein Ventilelement,welches in seiner Schließrichtung mit einer Schließkraft und in seiner Öffnungsrichtung mit einer Öffnungskraft beaufschlagt ist. Die Öffnungskraft wird durch Beaufschlagung einer ersten Druckfläche des Ventilelementes mit dem hydraulischen Druck des Federspeichers erzeugt, und die Schließkraft ergibt sich zumindest durch Beaufschlagung einer zweiten Druckfläche des Ventilelementes mit dem hydraulischen Druck des Federbeins. Dabei ist es besonders vorteilhaft, wenn sich die Schließkraft aus einer durch den hydraulischen Druck des Federbeins erzeugten Kraftkomponente sowie einer mittels einer Vorspanneinrichtung erzeugten, federelastischen Vorspannkraft zusammensetzt. Hierdurch ist es erfindungsgemäß möglich, die Höhe der Vorspannkraft mittels einer hydraulischen Verstelleinrichtung zu variieren, wozu die Verstelleinrichtung einen derart mit einem Steuerdruck beaufschlagbaren Stößel aufweist, daß eine Erhöhung des Steuerdruckes eine Erhöhung der Vorspannkraft bewirkt. Diese Ausgestaltung ist insbesondere für die bevorzugte Verwendung des Federungssystems für Kraftfahrzeuge von Vorteil, wenn nämlich als Steuerdruck der hydraulische Druck eines in einem Fahrzeug insbesondere auf der dem Federbein gegenüberliegenden Fahrzeugseite angeordneten, weiteren Federbeins verwendet wird. Hierbei tritt nämlich der vorteilhafte Effekt auf, daß eine automatische Stabilisierung des Fahrzeugs gegen Wankbewegungen (Neigen um die Fahrzeuglängsachse) erreicht wird. Fährt beispielsweise das Fahrzeug durch eine Linkskurve, so federn - fliehkraftbedingt - die auf der Kurvenaußenseite liegenden, also in diesem Fall die rechten, Federbeine ein, und die auf der Kurveninnenseite liegenden, linken Federbeine federn aus. Das Einfedern der rechten Federbeine verursacht einen Anstieg ihres hydraulischen Druckes und damit auch des die Ausfederungsventile der linken Federbeine beaufschlagenden Steuerdruckes. Die Ausfederungsventile öffnen hierdurch - bedingt durch die ebenfalls ansteigende Vorspannkraft der Ventilelemente - erst bei einer größeren Druckdifferenz, d.h. es wird auf der Kurveninnenseite ein noch stärkerer Abfall der Federkraft bzw. der Abstützkraft verursacht. Beim Wanken eines Fahrzeugs fällt folglich die Federkraft jedes ausfedernden Federbeins wesentlich steiler ab als bei "normalen" Federungsbewegungen. Durch diesen sehr starken Abfall der Feder- bzw. Abstützkraft der ausfedernden Federbeine wird vorteilhafterweise einer Neigung des Fahrzeugs in Fliehkraftrichtung entgegengewirkt.

Das erfindungsgemäße Federungssystem zeichnet sich somit durch eine insbesondere druckdifferenzgesteuerte, nur in Ausfederungsrichtung wirkende "Dämpfung" aus, wobei sich diese "Dämpfung" in der bevorzugten Ausführungsform der Höhe der jeweils beim Einfedern in das Federbein eingeleiteten Energie selbsttätig anpaßt, und wobei die gespeicherte Energie während des Ausfederns erfindungsgemäß wieder derart dosiert abgebaut wird, daß das Federbein zwar zügig wieder ausfedert, jedoch ein "Rückschlageffekt" vermieden wird. Dabei hat vorteilhafterweise die erfindungsgemäße Stabilisierung keinerlei negativen Einfluß auf die Federungscharakteristik, so daß sogar geländegängige Fahrzeuge mit dem erfindungsgemäßen System ausgerüstet werden können.

Weitere vorteilhafte Ausgestaltungsmerkmale der Erfindung sind in den Unteransprüchen sowie in der folgenden Beschreibung enthalten.

Anhand der Zeichnung soll im folgenden die Erfindung beispielhaft näher erläutert werden. Dabei zeigen

Fig. 1     ein erstes Ausführungsbeispiel eines erfindungsgemäßen Federungssystems mit zwei auf gegenüberliegenden Seiten einer Fahrzeugachse zugeordneten Federbeinen sowie mit zugehörigen Federspeichern und Dämpfungsventilen, wobei die Einzelkomponenten jeweils in prinzipiellen, stark vereinfachten Längsschnitten dargestellt sind,

Fig. 2     eine gegenüber Fig. 1 vergrößerte Darstellung einer bevorzugten Ausführungsform eines im Zusammenhang mit dem erfindungsgemäßen Federungssystem nach Fig. 1 verwendeten Dämpfungsventils,

Fig. 3     ein Kennlinien-Diagramm für eine Einzelradfederung, wobei das Federbein - ausgehend von einer statischen Lage - zunächst einfedert und dann wieder ausfedert,

Fig. 4     ein Kennliniendiagramm ebenfalls für eine Einzelradfederung, wobei das Federbein - ausgehend von der statischen Lage - zuerst ausfedert und dann wieder einfedert,

Fig. 5     ein Diagramm analog zu Fig. 3, jedoch für eine Parallelfederung, wobei zwei hinsichtlich der Dämpfungssteuerung zusammenwirkende Federbeine gemeinsam (parallel) federn,

Fig. 6     ein Diagramm analog zu Fig. 4, jedoch für eine Parallelfederung wie in Fig. 5,

Fig. 7     ein weiteres Ausführungsbeispiel eines erfindungsgemäßen Federungssystems mit zwei den auf gegenüberliegenden Seiten liegenden Rädern einer Fahrzeugachse zugeordneten Federbeinen sowie mit zugehörigen Federspeichern und Dämpfungsventilen, wobei die Einzelkomponenten jeweils in prinzipiellen, stark vereinfachten Längsschnitten dargestellt sind,

Fig. 8     eine gegenüber Fig. 7 vergrößerte Darstellung einer bevorzugten Ausführungsform eines im Zusammenhang mit diesem erfindungsgemäßen Federungssystem nach Fig. 7 verwendeten Dämpfungsventils,

Fig. 9     eine weitere bevorzugte Ausführungsform eines Dämpfungsventils,

Fig. 10    eine gegenüber Fig. 8 und 9 vergrößerte Ansicht des Bereichs eines Drosselventils innerhalb des Dämpfungsventils in einer vorteilhaften Weiterbildung der Erfindung,

Fig. 11    einen Teil eines erfindungsgemäßen Federungssystems analog zu Fig. 1 bzw. 7 in einer vorteilhaften Weiterbildung mit stark vereinfacht, schematisch dargestellten Komponenten und

Fig. 12    eine Darstellung wie in Fig. 11, jedoch in einer alternativen Ausführung.

In den verschiedenen Zeichnungsfiguren sind gleiche Teile und Komponenten stets mit den gleichen Bezugsziffern bezeichnet und daher in der Regel jeweils nur einmal beschrieben.

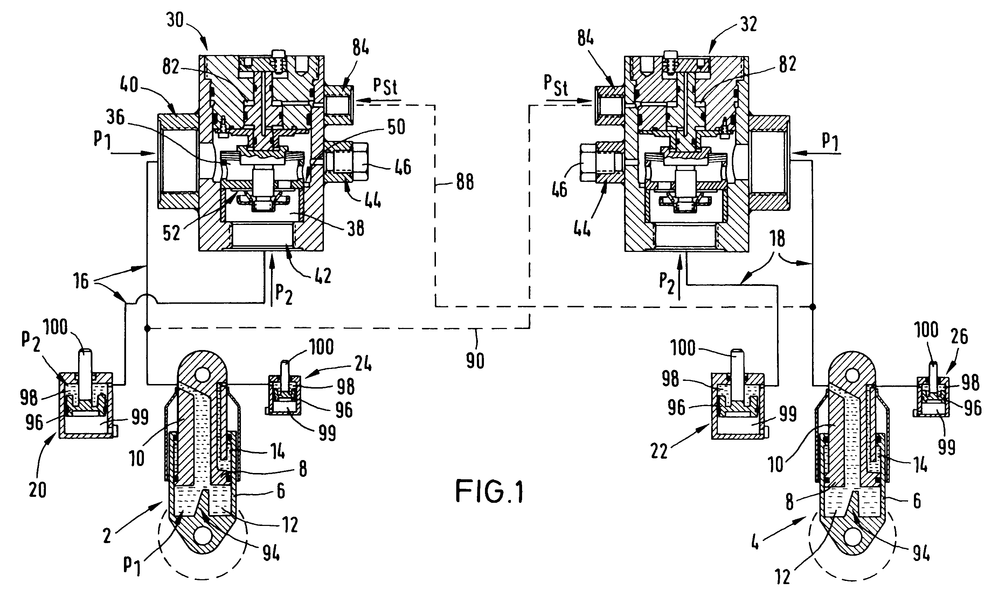

Bei dem in Fig. 1 dargestellten Ausführungsbeispiel eines erfindungsgemäßen Federungssystems ist jedem Rad einer Fahrzeugachse ein hydraulisches Federbein 2, 4 zugeordnet. Jedes Federbein 2, 4 besteht aus einem Zylinder 6 und einem in diesem zum Einfedern und Ausfedern beweglich geführten Kolben 8, der mit einer abgedichtet aus dem Zylinder 6 nach außen führenden Kolbenstange 10 verbunden ist. Die Federbeine 2, 4 werden in bekannter Weise mit dem Zylinder 6 einerseits und der Kolbenstange 10 andererseits zwischen einer ungefederten Masse (Fahrzeugrad/-achse) und einer gefederten Masse (Fahrzeugrahmen/-aufbau) angeordnet. Vorzugsweise teilt der Kolben 8 jeweils innerhalb des Zylinders 6 einen "lastaufnehmenden" Zylinderraum 12 von einem die Kolbenstange 10 umschließenden Ringraum 14 ab. Jeder Zylinderraum 12 enthält ein Hydraulikmedium und ist über eine hydraulische Verbindung 16 bzw. 18 mit einem hydropneumatischen Federspeicher 20 bzw. 22 verbunden. In der dargestellten, bevorzugten Ausführungsform der Erfindung ist auch jeweils der Ringraum 14 jedes Federbeins 2, 4 mit Hydraulikmedium gefüllt und unabhängig von dem Zylinderraum 12 hydraulisch mit einem separaten Federspeicher 24 bzw. 26 verbunden.

Erfindungsgemäß wird nun während des Ausfederns jedes Federbeins 2, 4 die Verbindung 16 bzw. 18 zwischen dem Zylinderraum 12 und dem zugehörigen Federspeicher 20 bzw. 22 alternierend gesperrt und geöffnet. Dabei ist es besonders vorteilhaft, das Sperren und Öffnen der Verbindung 16/18 selbsttätig einerseits durch den jeweils in dem Zylinderraum 12 des Federbeins 2/4 herrschenden hydraulischen Druck $p_1$ sowie andererseits durch den jeweils in dem Federspeicher 20/22 herrschenden hydraulischen Druck $p_2$ bzw. durch eine zwischen diesen Drücken auftretende Druckdifferenz zu steuern.

Hierzu ist jeweils in der Verbindung 16 bzw. 18 zwischen dem Zylinderraum 12 des Federbeins 2 bzw. 4 und dem zugehörigen Federspeicher 20 bzw. 22 ein spezielles Dämpfungsventil 30 bzw. 32 angeordnet.

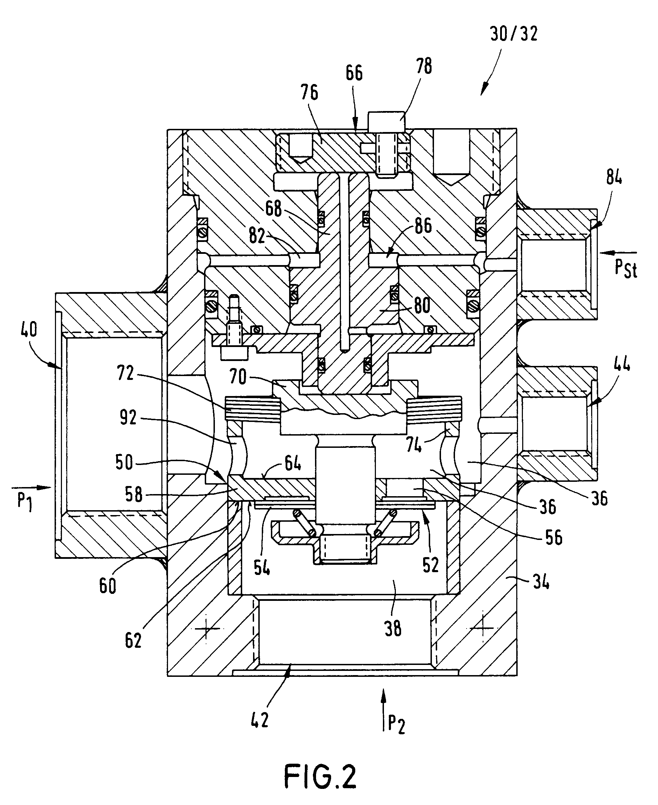

Anhand der Fig. 2 soll nun zunächst der Aufbau einer bevorzugten Ausführungsform dieses Dämpfungsventils 30/32 näher erläutert werden. Das Dämpfungsventil 30/32 besitzt ein Ventilgehäuse 34 mit einer ersten Druckkammer 36 und einer zweiten Druckkammer 38. In die erste Druckkammer 36 mündet ein Federbein-Anschluß 40 und in die zweite Druckkammer 38 ein Federspeicher-Anschluß 42. Wie sich auch

4

aus Fig. 1 ergibt, sind an den Anschlüssen 40, 42 die Verbindungen 16/18 angeschlossen. In die erste Druckkammer 36 kann des weiteren ein Füll- und Entlüftungsanschluß 44 münden, der aber im Betriebszustand z.B. durch eine Verschlußschraube 46 (Fig.1) verschlossen ist.

Zwischen der mit dem jeweiligen Federbein 2/4 verbundenen, ersten Druckkammer 36 und der mit dem zugehörigen Federspeicher 20/22 verbundenen, zweiten Druckkammer 38 sind nun einerseits ein Ausfederungsventil 50 und andererseits ein schaltungstechnisch zu diesem parallel geschaltetes Einfederungsventil 52 angeordnet. Wie im folgenden noch genauer erläutert werden wird, öffnet das Ausfederungsventil 50 unter bestimmten Voraussetzungen bei einer beim Ausfedern auftretenden Strömung des Hydraulikmediums (Strömung aus dem Federspeicher in Richtung des Federbeins) und schließt bei einer umgekehrten, beim Einfedern auftretenden Strömung. Das Einfederungsventil 52 ist als Platten-Rückschlagventil derart ausgebildet, daß es eine beim Einfedern des Federbeins 2/4 auftretende Strömung des Hydraulikmediums, d.h. eine Strömung aus dem Federbein 2/4 in den zugehörigen Federspeicher 20/22, im wesentlichen ungedrosselt durchläßt und bei einer umgekehrten Strömungsrichtung druckdicht schließt. Hierzu weist das Einfederungsventil 52 ein plattenförmiges, mit einer relativ geringen, federelastischen Vorspannkraft in Schließrichtung beaufschlagtes Ventilelement 54 auf, welches mindestens eine die erste Druckkammer 36 mit der zweiten Druckkammer 38 verbindende Öffnung 56 abdeckt.

Das Ausfederungsventil 50 besitzt ebenfalls ein plattenartiges Ventilelement 58, welches mit einem äußeren Randbereich einer seiner beiden Oberflächen dichtend mit einer Ventilsitzfläche 60 des Ventilgehäuses 34 zusammenwirkt, so daß es in seiner Schließlage eine Strömungspassage zwischen der ersten Druckkammer 36 und der zweiten Druckkammer 38 verschließt, wobei das Ventilelement 58 von der Seite der ersten Druckkammer 36 her an der Ventilsitzfläche 60 anliegt. Erfindungsgemäß ist das Ventilelement 58 des Ausfederungsventils 50 in Schließrichtung, d.h. von der Seite der ersten Druckkammer 36 her, mit einer Schließkraft beaufschlagt und in der entgegengesetzten Öffnungsrichtung mit einer Öffnungskraft, wobei die Öffnungskraft durch Beaufschlagung einer ersten, der zweiten Druckkammer 38 zugekehrten Druckfläche 62 des Ventilelementes 58 mit dem hydraulischen Druck $p_2$ des Federspeichers 20/22 erzeugt wird, und wobei die Schließkraft zumindest teilweise durch Beaufschlagung einer zweiten, der ersten Druckkammer 36 zugekehrten Druckfläche 64 des Ventilelementes 58 mit dem hydraulischen Druck $p_1$ des Federbein 2/4 erzeugt wird. Da in der in Fig. 2 dargestellten Schließlage das Ventilelement 58 mit einem äußeren Flächenbereich seiner der zweiten Druckkammer 38 zugekehrten Fläche dichtend auf der Ventilsitzfläche 62 aufliegt, ist erfindungsgemäß die erste Druckfläche 62 des Ventilelementes 58 kleiner als die gegenüberliegende, zweite Druckfläche 64. Es ist weiterhin besonders vorteilhaft, wenn die Schließkraft zusätzlich zu der durch den hydraulischen Druck $p_1$ des Federbeins 2/4 erzeugten Kraftkomponente noch durch eine federelastische Vorspannkraft vergrößert ist, wobei diese Vorspannkraft zweckmäßigerweise mittels einer in dem Ventilgehäuse 34 integriert angeordneten Vorspanneinrichtung 66 insbesondere mit variabler Höhe erzeugt wird.

Die Vorspanneinrichtung 66 besitzt einen beweglich geführten Stößel 68, der über ein Druckstück 70 eine vorzugsweise als Tellerfeder bzw. Tellerfeder-Paket ausgebildete Druckfeder 72 beaufschlagt, die ihrerseits das Ventilelement 58 beaufschlagt. Hierzu besitzt das Ventilelement 58 einen umfänglichen, sich in Richtung der ersten Druckkammer 36 erstreckenden Ringsteg 74, auf dem sich die Druckfeder 72 mit ihrem äußeren Flächenbereich elastisch abstützt. Der Stößel 68 ist nun einerseits mechanisch von einer Einstellschraube 76 beaufschlagt, mittels der vorteilhafterweise ein konstanter Minimalwert für die Vorspannkraft eingestellt werden kann. Zweckmäßigerweise besitzt die Einstellschraube 76 zur Sicherung gegen ungewolltes Verstellen eine Klemmschraube 78. Vorzugsweise ist der Stößel 68 nun andererseits auch mit einem hydraulischen Steuerdruck $p_{St}$ beaufschlagbar, über den die Höhe der Vorspannkraft und damit auch die Höhe der Schließkraft insgesamt vorteilhafterweise variabel ist. Der Stößel 68 besitzt hierzu einen Druckkolbenabschnitt 80, der in einer Steuerdruckkammer 82 des Ventilgehäuses 34 geführt ist. In diese Steuerdruckkammer 82 mündet ein Steuerdruck-Anschluß 84. Erfindungsgemäß ist somit eine hydraulische Verstelleinrichtung 86 gebildet, wobei der Stößel 68 bzw. dessen Druckkolbenabschnitt 80 auf der dem Ventilelement 58 und der Druckfeder 72 abgekehrten Seite von dem Steuerdruck $p_{St}$ beaufschlagt ist, so daß erfindungsgemäß eine Erhöhung des Steuerdruckes $p_{St}$ auch eine Erhöhung der Vorspannkraft bewirkt. Dabei wird vorzugsweise - wie aus Fig. 1 ersichtlich ist - als Steuerdruck $p_{St}$ der hydraulische Druck $p_1$ verwendet, der jeweils in dem in einem Fahrzeug auf der gegenüberliegenden Seite angeordneten Federbein herrscht. Im Falle der in Fig. 1 dargestellten Ausführungsform wird folglich das Dämpfungsventil 30 des Federbeins 2 über eine gestrichelt eingezeichnete Steuerleitung 88 von dem als Steuerdruck verwendeten Druck $p_1$ des gegenüberliegenden Federbeins 4 angesteuert, und das Dämpfungsventil 32 des Federbeins 4 wird über eine Steuerleitung 90 mit dem Druck $p_1$ des gegenüberliegenden Federbeins 2 angesteuert. Der Zweck und die Wirkungsweise dieser erfindungsgemäßen Ausgestaltung werden im folgenden noch erläutert werden.

In der dargestellten, bevorzugten Ausführungsform des Dämpfungsventils 30/32 ist das Einfederungsventil 52 im Bereich des Ventilelementes 58 des Ausfederungsventils 50 angeordnet, wozu die von dem Ventilelement 54 abgedeckte(n) Öffnung(en) 56 in dem Ventilelement 58 gebildet sind und demzufolge das Ventilelement 54 parallel zu dem Ventilelement 58 liegt. Dabei besitzt der Ringsteg 74 des Ventilelementes 58 mindestens eine, vorzugsweise mehrere radiale Öffnungen 92, durch die gewährleistet ist, daß das Hydraulikmedium beim Einfedern aus der ersten Druckkammer 36 über das Einfederungsventil 50 in die zweite Druckkammer 38 gelangen kann.

Wie nun weiterhin in Fig. 1 zu erkennen ist, weist jedes Federbein 2, 4 vorteilhafterweise eine beim Einfedern wirksame, hydraulische Endlagendämpfung 94 auf. Hierzu mündet ein im nach außen geführten Endbereich der Kolbenstange 10 angeordneter Anschluß für die Verbindung 16/18 über einen axial durch die Kolbenstange 10 und den Kolben 8 verlaufenden Kanal in den Zylinderraum 12. Am gegenüberliegenden, geschlossenen Zylinderende ist ein in axialer Richtung in den Zylinderraum 12 ragender Steuerstift angeordnet, der einen in Richtung seines freien Endes abnehmenden Querschnitt besitzt. Dieser Steuerstift taucht beim Einfedern in den Kanal des Kolbens und der Kolbenstange ein, wodurch sich ein wegabhängig verändernder Strömungsquerschnitt ergibt, der in Richtung der Einfederungsendlage bis auf einen Minimalwert abnimmt. Hierdurch wird die Einfederungsbewegung durch hydraulische Dämpfung langsam und schonend "abgebremst".

Vorzugsweise ist jeder Federspeicher 20, 22; 24, 26 als Kolben-Druckwandler mit einem schwimmend geführten, zwei unterschiedlich große Druckflächen aufweisenden Trennkolben 96 ausgebildet. Der Trennkolben 96 trennt jeweils einen mit dem Federbein 2/4 hydraulisch verbundenen Speicherraum 98 von einer das kompressible Medium enthaltenden Federkammer 99. Um die unterschiedlich großen Druckflächen des Trennkolbens 96 zu erreichen, ist dieser auf der Seite des Speicherraums 98 mit einer sich durch diesen hindurch und abgedichtet aus dem Federspeicher nach außen geführten Trennkolbenstange 100 verbunden. Durch diese Ausgestaltung als Druckwandler ist jeweils der pneumatische Vorspanndruck des kompressiblen Mediums geringer als der hydraulische Druck innerhalb des Speicherraums 98.

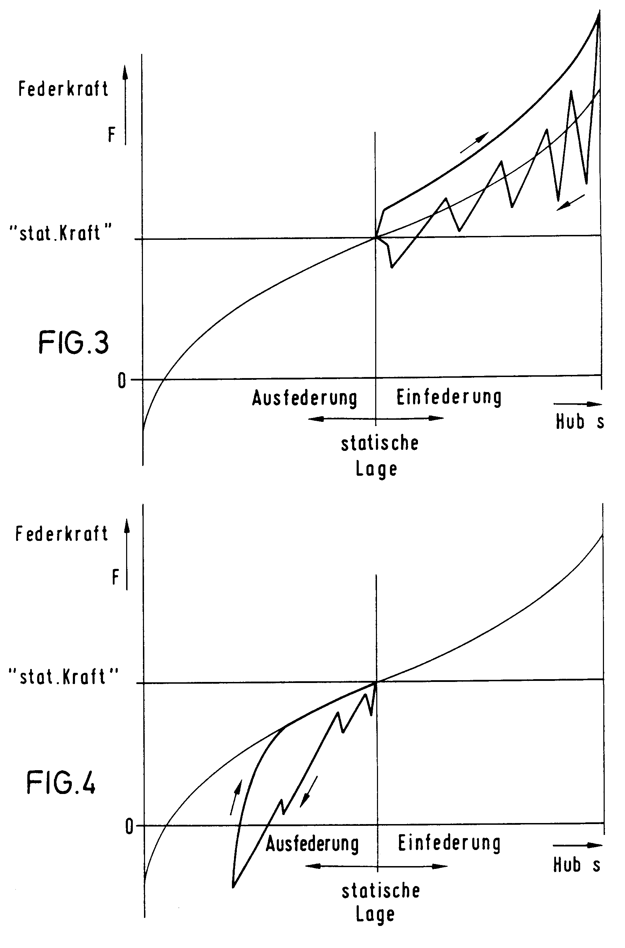

Im folgenden sollen nun anhand der Fig. 1 und der in den Fig. 3 bis 6 dargestellten Federkennlinien die Funktion und vorteilhafte Wirkungen der Erfindung, und zwar insbesondere der in Fig. 1 dargestellten, speziellen Ausführungsform, erläutert werden.

1. Einzelradfederung

Hierbei federt beispielsweise nur das in Fig. 1 links dargestellte Federbein 2 zunächst ein und dann wieder aus, während das gegenüberliegende Federbein 4 in seiner statischen Lage verbleibt. Beim Einfedern verdrängt der Kolben 8 aus dem Zylinderraum 12 ein bestimmtes Volumen des Hydraulikmediums über das Dämpfungsvetnil 30 in den Federspeicher 20. Hierzu öffnet das Einfederungsventil 52 praktisch ohne Strömungswiderstand, so daß beim Einfedern eine praktisch ungedämpfte Strömung auftritt. Allerdings wird in der bevorzugten Ausführungsform, wobei der Ringraum 14 mit dem separaten Federspeicher 24 verbunden ist, der Kolben 8 langsam abgebremst, da beim Einfedern der Druck in dem Zylinderraum 12 ansteigt und in dem Ringraum 14 durch dessen Volumenvergrößerung abfällt, so daß sich insgesamt eine Zunahme der in Abstützrichtung wirkenden Tragkraft des Federbeins 2 ergibt. Weiterhin wirkt beim Einfedern auch die oben beschriebene hydraulische Endlagendämpfung 94, so daß das Federbein 2 auch bei hoher Einfederungsgeschwindigkeit sanft in seine Endlage fährt.

Beim nachfolgenden Ausfedern hat nun erfindungsgemäß das Dämpfungsventil 30 bzw. das hierbei wirkende Ausfederungsventil 50 eine wesentliche Bedeutung. Ist beispielsweise das Federbein 2 ganz eingefedert, während das gegenüberliegende Federbein 4 in seiner statischen Lage steht, so ist die hydraulische Verstelleinrichtung 86 des Dämpfungsventils 30 mit dem der statischen Lage zugeordneten hydraulischen Druck $p_1$ beaufschlagt, der im Zylinderraum 12 des gegenüberliegenden Federbeins 4 herrscht. Über den Stößel 68 wird somit abhängig von diesem Steuerdruck eine in Schließrichtung wirkende Vorspannkraft auf das Ventilelement 58 ausgeübt. Zusätzlich zu dieser Vorspannkraft wirkt auf das Ventilelement 58 noch die Kraftkomponente, die durch den hydraulischen Druck $p_1$ des Zylinderraums 12 des Federbeins 2 hervorgerufen wird. Die Summe dieser Kraftkomponente und der Vorspannkraft ergibt die Schließkraft, mit der das Ventilelement 58 gegen die Ventilsitzfläche 60 gepreßt wird. Der Schließkraft wirkt die durch den Druck $p_2$ des Federspeichers 20 hervorgerufene Öffnungskraft entgegen. Es ist aber darauf hinzuweisen, daß auch ohne die beschriebene Vorspannkraft auch dann das Ventilelement 58 in seiner Schließlage gehalten wird, wenn die hydraulischen Drücke $p_1$ und $p_2$ gleich sind, und zwar aufgrund der oben beschriebenen Flächendifferenz zwischen den beiden Druckflächen 62 und 64 des Ventilelementes 58. Da folglich das Ausfederungsventil 50 bei Beginn des Ausfederns jedenfalls geschlossen ist, kann kein Hydraulikmedium aus dem Federspeicher 20 in das Federbein 2 zurückfließen. Der innerhalb des Zylinderraums 12 des Federbeins 2 herrschende Druck $p_1$ versucht dennoch, das Federbein 2 auszufedern. Aufgrund einer geringen Kompressibilität des Hydraulikmediums ist ein geringfügiges Ausfedern auch tatsächlich möglich, wobei ein rapider Abfall des Druckes $p_1$ auftritt. Ist der Druck $p_1$ soweit abgefallen, daß hierdurch die resultierende Schließkraft kleiner als die entgegengesetzte Öffnungskraft wird, so wird das Ausfederungsventil 50 durch die Beaufschlagung des Ventilelementes 58 mit dem Druck $p_2$ geöffnet. Erst ab diesem Moment kann Hydraulikmedium aus dem Federspeicher 20 über das Ausfederungsventil 50 in den Zylinderraum 12 des Federbeins 2 fließen. Hierdurch fällt nun aber der Druck $p_2$ im Federspeicher 20 ab, und der Druck $p_1$ im Zylinderraum 12 des Federbeins 2 steigt wieder an. Dies hat dann zur Folge, daß die Schließkraft wieder größer als die Öffnungskraft wird und das Ausfederungsventil 50 somit wieder schließt. Dieser beschriebene Vorgang wiederholt sich alternierend solange, bis die Ausfederungsbewegung beendet ist. Dieser bisher beschriebene Vorgang ist in Fig. 3 durch eine entsprechende Federkennlinie veranschaulicht. In Fig. 4 ist eine Federkennlinie dargestellt für den Fall, daß aus der statischen Lage heraus das Federbein zunächst ausfedert und nachfolgend wieder einfedert. Auch hier ist erkennbar, daß die erfindungsgemäße "Selbstunterbrechung" nur in Ausfederungsrichtung wirkt.

### 2. Parallelfederung

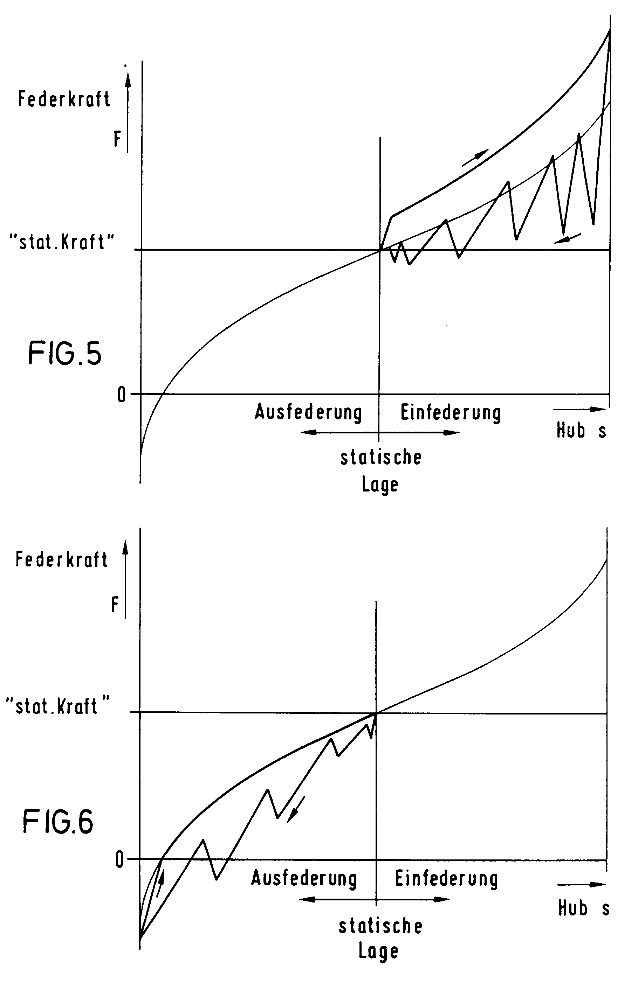

Bei einer Parallelfederung einer Achse, d.h. bei gleichzeitiger und gleichmäßiger Federung von zwei gegenüberliegenden Federbeinen 2, 4, läuft grundsätzlich der gleiche, wie oben beschriebene Vorgang ab. Unterschiedlich ist hierbei lediglich, daß bei einer Parallelfederung die Steuerdrücke $p_{St}$ jeweils ansteigen, so daß auch jeweils die Schließkräfte der Ausfederungsventile 50 ansteigen. Die Ausfederungsventile 50 öffnen hierdurch jeweils erst bei einem noch stärkeren Druckabfall des Druckes $p_1$, wie dies in den Fig. 5 und 6 gut zu erkennen ist. Dieser bei Parallelfederung größere Druckabfall ist insofern positiv, als bei einer Parallelfederung mehr Energie in den Fahrzeugaufbau eingeleitet wird. Das Fahrzeug wird somit in Ausfederungsrichtung mehr bzw. stärker gedämpft, so daß ein Aufschaukeln des Fahrzeugaufbaus effektiver unterdrückt wird. Besonders vorteilhaft ist dies beim Überfahren von Schlaglochserien.

### 3. Überfahren eines Schlagloches

Hierbei federt das betreffende Federbein 2/4 zunächst aus (Fig. 4 und 6), da das Rad aus seiner statischen Lage heraus die Tendenz hat, in das Schlagloch "hineinzufallen". Auch hier hat die Erfindung die vorteilhafte Wirkung, daß dieses schnelle Ausfedern wirksam verhindert wird. Bis zu einer bestimmten Länge des jeweiligen Schlagloches kann sogar erreicht werden, daß das Rad über das Schlagloch "hinwegfliegt", d.h. das Federbein federt gar nicht so weit aus, wie es normalerweise bei dem entsprechendem Schlagloch erfolgen würde. Hierdurch muß das Federbein auch nur geringfügig wieder einfedern. Es wird somit der schädliche "Rückschlageffekt" wirksam vermieden.

### 4. Seitliches Wanken

Ein seitliches Wanken, d.h. ein Neigen des Fahrzeugs um seine Längsachse, tritt insbesondere bei Kurvenfahrten auf. Die in Fig. 1 dargestellte Schaltung bewirkt nun vorteilhafterweise eine sehr effektive Stabilisierung gegen derartige Wankbewegungen.

Beispielsweise federt in einer Rechtskurve - fliehkraftbedingt - das linke Federbein 2 ein und das rechte Federbein 4 aus. Der Druck $p_1$ des linken Federbeins 2 steigt entsprechend an, und zwar dadurch, daß Hydraulikmedium in den Federspeicher 20 verdrängt wird, wodurch sich das Volumen des kompressiblen Mediums in der Federkammer 99 verringert und der Druck ansteigt. Der ansteigende hydraulische Druck $p_1$ wirkt als Steuerdruck $p_{St}$ in dem gegenüberliegenden Dämpfungsventil 32, so daß in der oben beschriebenen Weise der Ausfederungsbewegung des gegenüberliegenden Federbeins 4 entgegengewirkt wird. Beim Wanken eines Fahrzeugs fällt demzufolge die Federkraft des jeweils ausfedernden Federbeins wesentlich steiler ab, als bei einem "normalen" Federungsvorgang. Durch diesen - bedingt durch den steigenden Steuerdruck $p_{St}$ - sehr starken Abfall der Federkraft des ausfedernden Federbeins neigt sich das Fahrzeug nur noch unwesentlich in Fliehkraftrichtung. Dies kann wie folgt näher erklärt werden.

Beim Durchfahren einer Kurve neigt sich das Fahrzeug in Fliehkraftrichtung. Unterstützt wird diese Neigung normalerweise durch das auf der Kurveninnenseite angeordnete, ausfedernde Federbein, da die Stützkraft des Federbeins im Drehsinn der Fliehkraft wirkt. Es gilt folgendes Gesetz:

Fliehkraft mal Hebelarm plus Federkraft des Federbeins auf der Kurveninnenseite mal entsprechendem Hebelarm minus Federkraft des Federbeins auf der Kurvenaußenseite mal entsprechendem Hebelarm =

7

Null

Da nun erfindungsgemäß die Federkraft des Federbeins auf der Kurveninnenseite auf weniger als 1/10 mm Federweg bereits wesentlich abfällt, unterstützt dieses Federbein kaum noch die durch die Fliehkraft hervorgerufene Drehung des Fahrzeugaufbaus. Im Extremfall wird die Federkraft des inneren Federbeins derart klein, daß auf nur wenigen Zehntel Grad Drehung des Aufbaus das Moment Fliehkraft mal entsprechendem Hebelarm minus Federkraftabfall des Federbeins mal entsprechemdem Hebelarm gleich Null wird.

Der wesentliche Gedanke bei dieser erfindungsgemäßen Stabilisierung ist folglich, daß das jeweils ausfedernde Federbein einen extremen Federkraftabfall erfährt. Dieser Abfall der Federkraft ist je nach Dimensionierung des Dämpfungsventils 30/32 beispielsweise 30 bis 60-fach höher als bei einer normalen Ausfederung.

Eine weitere positive Eigenschaft der Erfindung liegt darin, daß durch die das Ausfederungsventil 50 beaufschlagende Vorspannkraft das Ausfederungsventil 50 geschlossen ist, wodurch in der statischen Lage der Druck $p_2$ jeweils höher als der Druck $p_1$ ist. Hierdurch muß zuerst im Zylinderraum 12 ein Druck aufgebaut werden, ehe das Ausfederungsventil 50 öffnet. Im Zylinderraum 12 des einfedernden Federbein wirkt hierdurch nach einem sehr kleinen Einfederungsweg ein wesentlich höherer Druck als in der statischen Lage. Hierdurch sinkt auch dieses Federbein nicht so weit ein.

Erfindungsgemäß ist für die beschriebene Stabilisierung auch der Ladezustand des Fahrzeugs ausschlaggebend. Denn eine Erhöhung der Ladung bewirkt auch eine Zunahme der hydraulischen Drücke $p_1$ und damit auch der Steuerdrücke $p_{St}$.

Es ist folglich ein wesentlicher Vorteil der Erfindung, daß sich die Dämpfung jeweils der beim Einfedern gespeicherten Energie anpaßt, wobei dann die gespeicherte Energie dosiert so abgebaut wird, daß die Federbeine zwar zügig wieder auseinanderfahren, jedoch ein Rückschlageffekt vermieden wird.

In den bisher beschriebenen Ausführungsformen der Erfindung ist der Stößel der Verstelleinrichtung nur einseitig mit dem Steuerdruck beaufschlagt; die gegenüberliegende Fläche des Stößels liegt auf atmosphärischem Druck. Daher ist es hier erforderlich, einen mechanisch auf das Ventilelement wirkenden Abschnitt des Stößels mit einer Umfangsdichtung zu versehen, die den Ventil-Innenraum, in dem der Druck des Federbeins herrscht, von dem atmosphärischen Druck trennt. Bei einem eventuellen Defekt dieser Dichtung könnte nun aber der Druck des Federbeins auch auf die eigentlich drucklose Fläche des Stößels wirken, so daß das Ventil aufgrund einer undefinierten Schließkraft hinsichtlich seiner Dämpfungswirkung nicht mehr bestimmbar wäre.

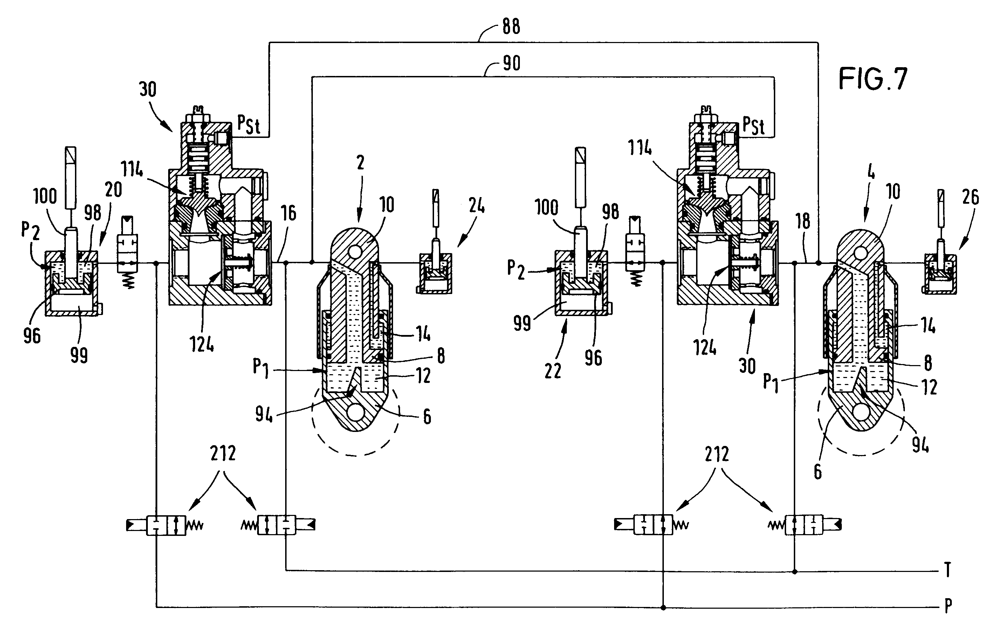

Daher wird nun in den Ausführungen nach Fig. 7 bis 10 das Federungssystem so ausgestaltet, daß in praktisch allen Betriebszuständen konstante Federungs- und Dämpfungseigenschaften gewährleistet werden können.

Erfindungsgemäß wird hierzu der statische Druck innerhalb des strömenden Hydraulikmediums durch eine bereichsweise Erhöhung der Strömungsgeschwindigkeit partiell vermindert, so daß die das Sperren der Verbindung zwischen dem Federbein und dem Federspeicher bewirkende Druckdifferenz vergrößert wird. Hierdurch ist es vorteilhafterweise möglich, die entgegengesetzte Schließkraft anteilig zu reduzieren, weshalb der oben erwähnte Stößel der Verstelleinrichtung auf seiner dem Steuerdruck abgekehrten Seite ebenfalls mit Druck beaufschlagt werden kann, und zwar mit dem Druck des Federbeins. Die oben beschriebene Dichtung des Stößels ist daher entbehrlich. Es entsteht zwar bei einem Druckgleichgewicht zwischen dem Steuerdruck und dem entgegengesetzten Druck keine Vorspannkraft mehr durch den Stößel der Verstelleinrichtung, jedoch wird diese "fehlende" Vorspannkraft nun erfindungsgemäß durch den strömungsgeschwindigkeitsbedingt verminderten Druck und die hieraus resultierende Kraft "ersetzt". Durch geeignete Auslegung der Systemkomponenten bleibt das System somit unter allen Betriebsbedingungen hinsichtlich seiner Federungs- und Dämpfungseigenschaften genau und beherrschbar.

Das in Fig. 7 dargestellte Ausführungsbeispiel eines erfindungsgemäßen Federungssystems entspricht vom Grundsätzlichen her dem der Fig. 1, weshalb gleiche Bezugsziffern verwendet wurden, so daß auf die obige Beschreibung verwiesen werden kann.

Unterschiedlich ist hier aber die Ausgestaltung des Dämpfungsventils 30.

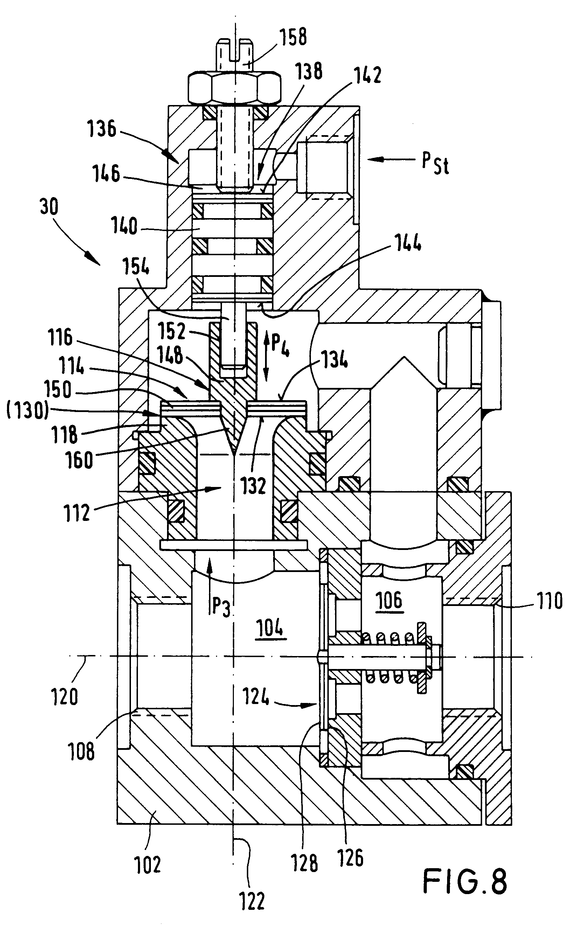

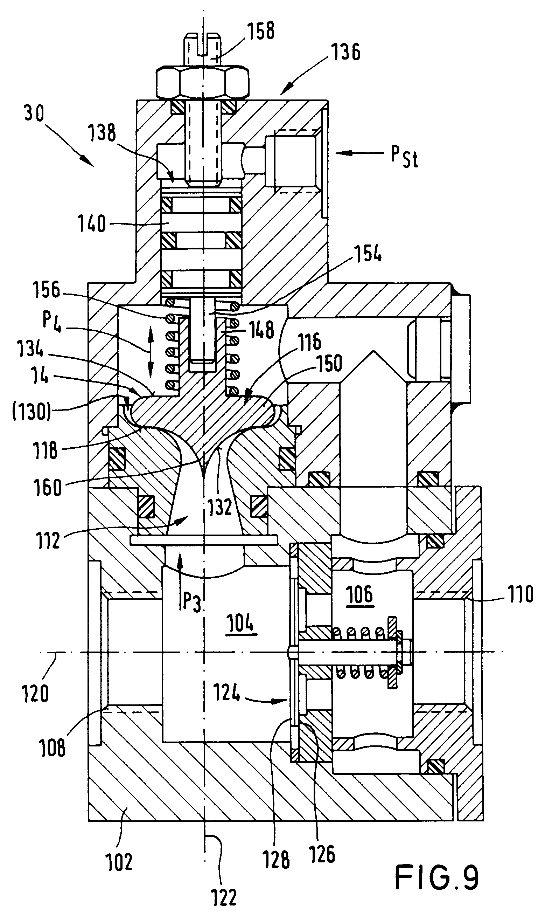

Wie sich aus Fig. 8 und 9 jeweils ergibt, besitzt dieses erfindungsgemäße Dämpfungsventil 30 ein Ventilgehäuse 102 mit einer ersten Druckkammer 104 und einer zweiten Druckkammer 106, wobei in die erste Druckkammer 104 ein erster Anschluß 108 und in die zweite Druckkammer 106 ein zweiter Anschluß 110 für die Leitungsverbindungen 16, 18 (Fig. 7) münden. In einem die erste Druckkammer 104 mit der zweiten Druckkammer 106 verbindenden Strömungskanal 112 ist ein Drosselventil 114 angeordnet, welches aus einem Ventilkörper 116 und einem Ventilsitz 118 besteht. Der Ventilkörper 116 ist zwischen einer auf dem Ventilsitz 118 liegenden Schließlage (in Fig. 8 und 9 jeweils dargestellt) und einer von dem Ventilsitz

8

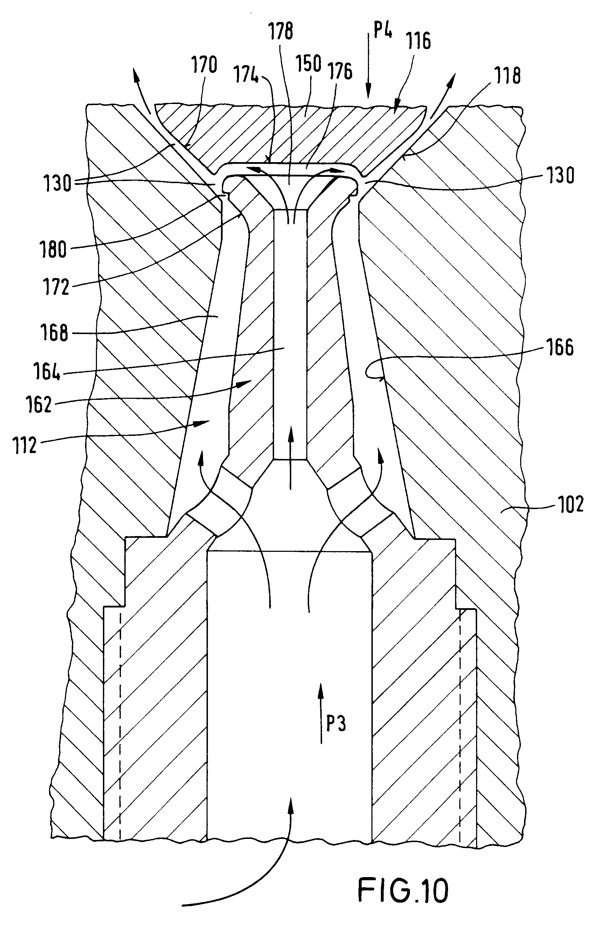

118 abgehobenen Öffnungslage (siehe hierzu Fig. 10) beweglich.

In den dargestellten, bevorzugten Ausführungsformen liegen die Anschlüsse 108, 110 und die Druckkammern 104, 106 im wesentlichen fluchtend auf einer Längsachse 120. Der Strömungskanal 112 zweigt in Richtung einer zu der Längsachse 120 zumindest annähernd senkrechten Querachse 122 aus der ersten Druckkammer 104 ab, ist hinter dem auf der Querachse 122 liegend angeordneten Drosselventil 114 vorzugsweise zweimal um jeweils zumindest annähernd 90° zurück in Richtung der Längsachse 120 abgewinkelt und mündet dann in die zweite Druckkammer 106 wiederum in etwa annähernd senkrechter Richtung zu der Längsachse 120. Des weiteren ist vorzugsweise ein hinsichtlich der Strömungsrichtung gegensinnig wirkendes Rückschlagventil 124 hydraulisch zu dem Drosselventil 114 parallelgeschaltet und dabei vorzugsweise derart unmittelbar zwischen der ersten und der zweiten Druckkammer 104, 106 auf der Längsachse 120 liegend angeordnet, daß die Strömung über das Rückschlagventil 124 aus der zweiten Druckkammer 106 in die erste Druckkammer 104 im wesentlichen geradlinig in Richtung der Längsachse 120 verläuft. Das Rückschlagventil 124 besitzt zweckmäßigerweise ein scheibenförmiges, mit einem Ventilsitz 126 zusammenwirkendes und mit einer derart geringen, federelastischen Vorspannkraft in Schließrichtung beaufschlagtes Ventilelement 128, daß es bei einer hydraulischen Strömung von der zweiten Druckkammer 106 zu der ersten Druckkammer 104 im wesentlichen ohne Drosselwirkung öffnet und bei einer umgekehrten Strömungsrichtung druckdicht schließt. In der Schließstellung strömt das hydraulische Medium dann über das Drosselventil 114. Durch diese erfindungsgemäße Ausgestaltung wird erreicht, daß eine Hydraulikströmung von der zweiten Druckkammer 106 in die erste Druckkammer 104 nahezu ohne Dämpfung über das Rückschlagventil 124 strömt, wobei aufgrund der beschriebenen Ausgestaltung auch eine Dämpfungswirkung durch Wirbelbildung weitgehend vermieden wird, da diese Strömung im wesentlichen laminar, wirbelfrei ist. Dabei ist die Aufteilung in zwei Strömungswege einerseits über das Drosselventil 114 und andererseits über das Rückschlagventil 124 auch insofern vorteilhaft, als hierdurch in diesen Strömungswegen unterschiedliche Strömungsquerschnitte gewählt werden können. Insbesondere für die Strömung über das Rückschlagventil 124 kann ein großer Strömungsquerschnitt gewählt werden, um diese Strömung besonders verlustfrei zu machen.

Erfindungsgemäß ist nun zumindest in der Öffnungslage des Ventilkörpers 116 in einem auf der in Schließrichtung weisenden Seite des Ventilkörpers 116 liegenden Bereich ein verengter Drosselspalt 130 mit einem maximalen Querschnitt derart gebildet, daß in diesem Bereich innerhalb des in der Öffnungslage des Ventilkörpers 116 durch den Strömungskanal 112 strömenden Mediums eine erhöhte Strömungsgeschwindigkeit und hierdurch eine partielle Druckverminderung in diesem Bereich "unterhalb" des Ventilkörpers 116 derart auftritt, daß hierdurch der Ventilkörper 116 bei vorgegebenen Flächen- und Druckverhältnissen - wie im folgenden noch erläutert werden wird - in seine Schließlage gebracht wird ("Selbstschließeffekt"). In den Ausführungen nach Fig. 8 und 9 ist der Drosselspalt 130 jeweils in der Öffnungslage des Ventilkörpers 116 zwischen diesem und dem Ventilsitz 118 gebildet; da aber jeweils die Schließlage dargestellt ist, wurde die entsprechende Bezugsziffer 130 für den - in dieser Stellung ja nicht vorhandenen - Drosselspalt in Klammern gesetzt. Gemäß Fig. 10 ist der Drosselspalt 130 teilweise zwischen dem Ventilkörper 116 und dem Ventilsitz 118, hauptsächlich aber zwischen Teilen des Ventilgehäuses 102 gebildet, was im folgenden noch genauer erläutert werden wird.

Im Betriebszustand des erfindungsgemäßen Dämpfungsventils 30 ist der Ventilkörper 116 in Schließrichtung mit einer Schließkraft und in Öffnungsrichtung mit einer Öffnungskraft beaufschlagt, wobei die Öffnungskraft durch Beaufschlagung einer ersten, der Strömungsrichtung entgegengesetzten Druckfläche 132 des Ventilkörpers 116 mit einem hydraulischen Öffnungsdruck $p_3$ erzeugt wird. Die Schließkraft wird zumindest teilweise durch Beaufschlagung einer zweiten, der ersten Druckfläche 132 gegenüberliegenden Druckfläche 134 des Ventilkörpers 116 mit einem hydraulischen Schließdruck $p_4$ erzeugt. Da in der Schließlage der Ventilkörper 116 mit einem äußeren Flächenbereich seiner dem Öffnungsdruck $p_3$ zugekehrten Fläche dichtend auf dem Ventilsitz 118 aufliegt, ist erfindungsgemäß die erste Druckfläche 132 flächenmäßig kleiner als die zweite Druckfläche 134. Hierdurch muß zum Öffnen des Drosselventils 114 jedenfalls der Öffnungsdruck $p_3$ größer als der Schließdruck $p_4$ sein, und zwar aufgrund der geltenden Beziehung: Kraft = Fläche mal Druck.

Es ist weiterhin besonders vorteilhaft, wenn die Schließkraft zusätzlich zu der durch den hydraulischen Schließdruck $p_4$ erzeugten Kraftkomponente noch durch eine elastische Vorspannkraft vergrößert ist, wobei diese Vorspannkraft zweckmäßigerweise zum Zwecke der Einstellung der Dämpfungswirkung mittels einer in dem Ventilgehäuse 102 integriert angeordneten Vorspanneinrichtung 136 insbesondere mit variabler Höhe erzeugt wird. Die Vorspannkraft ist dabei insbesondere mechanisch auf einen Minimalwert voreinstellbar. Ausgehend von dem Minimalwert ist die Höhe der Vorspannkraft zudem erfindungsgemäß mittels einer insbesondere hydraulischen Verstelleinrichtung 138 variabel, wobei die Verstelleinrichtung 138 einen derart mit einem hydraulischen Steuerdruck $p_{St}$ beaufschlagbaren Steuerkolben 140 aufweist, daß eine Erhöhung des Steuerdruckes $p_{St}$ eine Erhöhung der Vorspannkraft und damit auch der Schließkraft bewirkt. Der Steuerkolben 140 der Verstelleinrichtung 138 besitzt eine erste, von dem Steuerdruck $p_{St}$ beaufschlagte Druckfläche 142 sowie vorzugsweise auch eine zweite, gegenüberliegende, von dem Schließdruck $p_4$ beaufschlagte Druckfläche 144, wobei beide Druckflächen 142, 144 insbesondere gleich groß ausgebildet sind. Hierdurch entsteht eine Vorspannkraftkomponente nur dann, wenn der Steuerdruck $p_{St}$ größer als der Schließdruck $p_4$ ist. Bei Druckgleichgewicht zwischen diesen beiden Drücken hingegen verbleibt der Steuerkolben 140 in seiner statischen Lage; es entsteht keine Vorspannkraftkomponente.

Der in der Öffnungslage des Ventilkörpers 116 zumindest teilweise zwischen diesem und dem Ventilsitz 118 gebildete Drosselspalt 130 ist erfindungsgemäß insbesondere durch einen mechanischen Anschlag 146 auf eine maximale Öffnungsweite begrenzbar.

Zweckmäßigerweise besteht der Ventilkörper 116 aus einem zentrischen Führungsteil 148 und einem mit dem Ventilsitz 118 zusammenwirkenden Kopfteil 150. Das Führungsteil 148 ist mit der Verstelleinrichtung 138 bzw. der Vorspanneinrichtung 136 vorzugsweise über einen in eine Führungsvertiefung 152 des Führungsteils 148 eingreifenden Führungsstift 154 des Steuerkolbens 140 verbunden. In der Ausführungsform nach Fig. 8 ist das Kopfteil 150 des Ventilkörpers 116 scheibenförmig aus einem federelastischen Material gebildet, so daß ein Teil der elastischen Vorspannkraft von dem Kopfteil 150 selbst erzeugt wird. Gemäß Fig. 9 (und 10) ist das Kopfteil 150 vorzugsweise starr und mit dem Führungsteil 148 einstückig ausgebildet, wobei zwischen dem Kopfteil 150 und dem Steuerkolben 140 der Verstelleinrichtung 138 eine vorgespannte, insbesondere als Schraubenfeder ausgebildete Druckfeder 156 angeordnet ist. Erfindungsgemäß wird somit jeweils der Minimalwert der elastischen Vorspannkraft durch die Federelastizität des scheibenförmigen Kopfteils 150 gemäß Fig. 8 bzw. der das Kopfteil 150 beaufschlagenden Druckfeder 156 gemäß Fig. 9 erzeugt. Eine Erhöhung der Vorspannkraft erfolgt dann durch Beaufschlagung des Steuerkolbens 140 mit dem Steuerdruck $p_{St}$. Dabei wird der maximale Bewegungsbereich in Öffnungsrichtung des Ventilkörpers 116 durch den Anschlag 146 begrenzt, der zweckmäßigerweise von einer Einstellschraube 158 gebildet ist, die auf den Steuerkolben 140 sowie über diesen und den Führungsstift 154 auch auf das Führungsteil 148 des Ventilkörpers 116 wirkt. In der jeweils dargestellten Anschlagstellung ist hierzu zwischen dem Führungsstift 154 und einer Grundfläche der Führungsvertiefung 152 ein axiales Spiel vorhanden, welches den maximalen Bewegungsbereich des Ventilkörpers 116 in Öffnungsrichtung und damit den Drosselspalt 130 begrenzt.

In den Ausführungsformen nach Fig. 8 und 9 weist der Ventilkörper 116 jeweils eine zentrische, entgegen der Strömungsrichtung in den Strömungskanal 112 ragende Spitze 160 derart auf, daß der Strömungskanal 112 im vor dem Drosselventil 114 bzw. vor dem Drosselspalt 130 liegenden Bereich einen ringförmigen, sich in Strömungsrichtung stetig reduzierenden Querschnitt aufweist. Dies ist einerseits insofern vorteilhaft, als hierdurch die Strömung derart radial nach außen umgelenkt wird, daß erfindungsgemäß die Entstehung einer in Öffnungsrichtung auf den Ventilkörper 116 wirkenden Impulskraft weitgehend vermieden wird. Zudem kann durch die stetige Verringerung des Querschnittes des Strömungskanals 112 im vor dem Drosselspalt 130 liegenden Bereich eine nahezu wirbelfreie, laminare Strömung erreicht werden.

In dieser Hinsicht sind insbesondere die Ausführungsformen nach Fig. 9 und 10 besonders vorteilhaft. Hiernach weist der Strömungskanal 112 durch eine entsprechende, gehäuseseitige Profilierung einen sich in Strömungsrichtung derart vor dem Drosselventil 114 kontinuierlich bis auf den Querschnitt des Drosselspaltes 130 verkleinernden und hinter dem Drosselspalt 130 wieder kontinuierlich vergrößernden Querschnitt auf, daß die Strömung über den gesamten Bereich vor dem, über den sowie hinter dem Drosselspalt 130 zumindest annähernd laminar und wirbelfrei ist. In diesen Ausführungsformen kann davon gesprochen werden, daß der Strömungskanal zumindest bereichsweise venturirohrartig ausgebildet ist. Dabei liegt bei der Ausführungsform nach Fig. 9 das Ende der Spitze 160 des Ventilkörpers 116 in einem Bereich des venturirohrartig ausgebildeten Strömungskanals 112, in dem während der Strömung des Hydraulikmediums ein etwa "mittlerer" Druck herrscht, was bedeutet, daß dieser Druck in etwa zwischen dem maximalen Öffnungsdruck und dem strömungsgeschwindigkeitsbedingt reduzierten, minimalen Druck liegt. Durch diese Ausgestaltung wird erreicht, daß durch die Druckbeaufschlagung der Spitze 160 mit einem Druck, der ja zwangsläufig zumindest geringfügig größer als der durch die Strömungsgeschwindigkeitserhöhung im Bereich des Drosselspaltes 130 herrschende Druck ist, nur eine vernachlässigbar kleine Kraftkomponente in Öffnungsrichtung des Ventilkörpers 116 erzeugt wird.

In der Ausführungsform gemäß Fig. 10 wird eine Erzeugung von durch Auftreffen der Hydraulikströmung auf den Ventilkörper 116 bedingten Impulskräften besonders effektiv vermieden. In dieser Ausführungsform ist in dem in Strömungsrichtung vor dem Drosselventil 114 liegenden Bereich des Strömungskanals 112 ein zentrisches, rohrartiges Einsatzteil 162 derart angeordnet, daß der Strömungskanal 112 einerseits aus einem zentrischen, durch das Einsatzteil 162 verlaufenden Kanalabschnitt 164 und andererseits aus einem hierzu konzentrischen, zwischen dem Einsatzteil 162 und einer äußeren Kanalwandung 166 gebildeten Ringkanalabschnitt 168 besteht. Dabei verringert sich zumindest der Querschnitt des Ringkanalabschnittes 168 in Strömungsrichtung kontinuierlich bis auf den anteilig im Endbereich des Einsatzteils 162 zwischen diesem und der äußeren Kanalwandung 166 gebildeten Drosselspalt 130. Vorzugsweise besitzt der zentrische Kanalabschnitt 164 einen gegenüber dem Ringkanalabschnitt 168 geringeren Querschnitt. Bei dieser Ausführungsform ist somit insbesondere der Ringkanalabschnitt 168 venturirohrartig, d.h. praktisch als "Ringventurirohr", ausgebildet. Auch hier wird demzufolge eine praktisch verlustfreie Strömung erzielt. Zur Bildung des Ventilsitzes 118 erweitert sich die äußere Kanalwandung 166 konisch, und der Ventilkörper 116 besitzt eine dem konischen Ventilsitz 118 hinsichtlich des Konuswinkels zumindest annähernd entsprechende Außenkonusfläche 170, so daß der Drosselspalt 130 bzw. der entsprechende Teil des Drosselspaltes 130 zwischen dem Ventilsitz 118 und dem Ventilkörper 116 einen sich entsprechend konisch erweiternden Verlauf besitzt. Ferner weist das Einsatzteil 162 an seinem dem Ventilkörper 116 zugekehrten Ende einen sich derart konisch erweiternden Außenumfang 172 auf, daß der Ringkanalabschnitt 168 kontinuierlich über den im Endbereich des Einsatzteils 162 gebildeten Teil des Drosselspaltes 130 in den in der Öffnungslage zwischen dem Ventilsitz 118 und dem Ventilkörper 116 gebildeten, vorzugsweise hinsichtlich der Spaltweite einstellbaren Teil des Drosselspaltes 130 übergeht. Die eigentliche Strömung verläuft hierbei über den Ringkanalabschnitt 168, so daß diese Strömung durch die beschriebene Profilierung des Endes des Einsatzteils 162 nicht mehr in Verschiebungsrichtung auf den Ventilkörper 116 wirken kann.

Der Ventilkörper 116 weist an seiner dem Einsatzteil 162 zugekehrten Stirnseite eine flache, an das Ende des Einsatzteils 162 angepaßte Aufnahmevertiefung 174 derart auf, daß in der Öffnungslage des Ventilkörpers 116 zwischen diesem und dem Ende des Einsatzteils 162 ein schmaler Strömungsspalt 176 gebildet ist, der radial nach außen in den Drosselspalt 130 mündet. Dabei ist es zweckmäßig, wenn der zentrische Kanalabschnitt 164 an seinem dem Ventilkörper 116 zugekehrten Mündungsende eine insbesondere konische Erweiterung 178 aufweist. Da der Strömungsspalt 176 etwa in dem Bereich des Drosselspaltes 130 in diesen mündet, in dem eine maximale Strömungsgeschwindigkeit und damit ein minimaler Druck vorliegen, wird das durch den zentrischen Kanalabschnitt 164 strömende Medium nach dem Prinzip einer Wasserstrahlpumpe radial nach außen gesaugt, so daß auch hierdurch eine Unterstützung des Selbstschließeffektes erreicht wird, weil das Medium durch den zentrischen Kanalabschnitt 164 nicht so schnell nachströmen kann, wie es in den Drosselspalt 130 "gesaugt" wird. Bei dieser Ausführungsform ist es zudem vorteilhaft, wenn das rohrartige Einsatzteil 162 an seinem Ende etwa im Bereich des geringsten Querschnittes des Drosselspaltes 130 eine umfängliche, insbesondere durch eine ringförmige Rille 180 gebildete Strömungsabrißkante aufweist.

Im folgenden soll kurz die Funktion des Dämpfungsventils 30 bzw. des Drosselventils 114 erläutert werden. Die erfindungsgemäße, durch die gezielte Erhöhung der Strömungsgeschwindigkeit erzeugte, partielle Druckverminderung - gemeint ist hier eine Verminderung des statischen Druckes innerhalb des strömenden Mediums - betrifft den Öffnungsdruck $p_3$, so daß das Produkt aus dem Öffnungsdruck $p_3$ mal erste Druckfläche 132 des Ventilkörpers 116 kleiner wird als die entgegengesetzt wirkende Schließkraft und das Ventil 114 hierdurch schließt. Aufgrund der dann fehlenden Strömung steigt nun aber wieder der Öffnungsdruck $p_3$ an, so daß das Ventil 114 wieder öffnet, wenn die Öffnungskraft die Schließkraft übersteigt, bis sich wieder eine derart hohe Strömungsgeschwindigkeit in dem erfindungsgemäßen Drosselspalt 130 aufgebaut hat, daß das Ventil wieder aufgrund der partiellen Druckverminderung schließt. Dieser Vorgang, d.h. das ständig alternierende Öffnen und Schließen des Ventils, wiederholt sich solange, bis die zu dämpfende Hydraulikströmung endet, d.h. bis kein ausreichender Öffnungsdruck mehr vorhanden ist. Das erfindungsgemäße Drosselventil 114 besitzt folglich einen "Selbstschließeffekt", wobei das Drosselventil durch die strömungsgeschwindigkeitsbedingte, partielle Druckverminderung immer wieder kurzzeitig "zugesaugt" wird und hierdurch den Strömungskanal 112 alternierend sperrt und wieder öffnet (Selbstunterbrechung der Strömung). Eine Dämpfungswirkung entsteht somit - im Gegensatz zum Stand der Technik - nicht mehr durch bewußte Erzeugung von Wirbeln und Turbulenzen, sondern vorteilhafterweise durch ein gesteuertes, dosiertes, sukzessives "Nachlassen" von Hydraulikmedium, bis die zu dämpfende Strömung ganz beendet ist. Eine übermäßige Erwärmung des Hydraulikmediums kann daher vermieden werden. Die vorliegende Erfindung stellt somit eine Abkehr von dem bisherigen Dämpfungsprinzip dar.

Die Erfindung eröffnet hierbei die besonders vorteilhafte Möglichkeit, durch die beschriebene, venturirohrartige Ausgestaltung des Strömungskanals 112 im Bereich vor und hinter dem Drosselventil 114 Turbulenzen nahezu vollständig zu vermeiden, was nach dem Stand der Technik nicht möglich wäre, da ja bei bekannten Dämpfungsventilen die Dämpfungswirkung gerade auf der bewußten Erzeugung von Turbulenzen beruht. Hierdurch werden erfindungsgemäß zudem in optimaler Weise auch bei sehr großen Strömungsgeschwindigkeiten Erosionserscheinungen im Bereich des Drosselventils wirksam vermieden. Es entsteht vorteilhafterweise allenfalls eine sehr geringfügige Erwärmung durch innere Reibung in der laminaren Strömung, so daß sich das erfindungsgemäße Dämpfungsventil besonders für die Anwendung in hydropneumatischen Federungssystemen eignet, weil es praktisch keinen nachteiligen Einfluß auf die Federkennlinie eines hydropneumatischen Federspeichers hat.

Erfindungsgemäß wird - wie aus Fig. 7 ersichtlich ist und analog zu Fig. 1 - als Steuerdruck $p_{St}$ vorzugsweise derjenige hydraulische Druck $p_1$ verwendet, der jeweils in dem in einem Fahrzeug auf der gegenüberliegenden Seite angeordneten Federbein herrscht. Es kann in diesem Zusammenhang auf die obigen Erläuterungen, insbesondere auch hinsichtlich der Funktion und der vorteilhaften Wirkungen, verwiesen werden. Allerdings muß hierzu erwähnt werden, daß sich folgende Teile bzw. Komponenten der Ausführungen nach Fig. 1 und 2 einerseits und nach Fig. 7 bis 10 andererseits funktionell entsprechen

| Einfederungsventil 52 | Rückschlagventil 124 |
|---|---|
| Ausfederungsventil 50 | Drosselventil 114 |
| Verstelleinrichtung 86 | Verstelleinrichtung 138 |
| Stößel 68 | Steuerkolben 140 |
| Ventilelement 58 | Ventilkörper 116 |
| Ventilsitzfläche 60 | Ventilsitz 118 |
| Druckflächen 62, 64 | Druckflächen 132, 134 |

Ergänzend muß zur Funktion der Ausführungen nach Fig. 7 bis 10 aber noch auf folgende Besonderheiten hingewiesen werden.

1. Einzelfederung

Hier unterstützt - wie oben beschrieben - die partielle, strömungsgeschwindigkeitsbedingte Druckverminderung jeweils das Schließen des Drosselventils 114.

2. Parallelfederung

Bei einer Parallelfederung einer Achse, d.h. bei gleichzeitiger und gleichmäßiger Federung von zwei gegenüberliegenden Federbeinen 2, 4, läuft grundsätzlich der gleiche, wie oben unter 1. beschriebene Vorgang ab. Unterschiedlich ist hierbei lediglich, daß bei einer Parallelfederung die Schließdrücke $p_4$ jeweils ansteigen, so daß auch jeweils die Schließkräfte der Drosselventile 114 ansteigen. Dies ist bei Parallelfederung insofern positiv, als bei einer Parallelfederung mehr Energie in den Fahrzeugaufbau eingeleitet wird. Das Fahrzeug wird somit in Ausfederungsrichtung mehr bzw. stärker gedämpft, so daß ein Aufschaukeln des Fahrzeugaufbaus effektiver unterdrückt wird. Besonders vorteilhaft ist dies beim Überfahren von Schlaglochserien.

Die übrigen Funktionen entsprechen im wesentlichen den obigen Erläuterungen in den Abschnitten 3. und 4.

In einer vorteilhaften, in Fig. 7 veranschaulichten Weiterbildung der Erfindung können die Zylinderräume 12 über Schaltventile 212 wahlweise mit einer Druckleitung P oder einer Tankleitung T verbunden werden, um das Niveau der Federzylinder 2, 4 einzustellen oder die Räder des Fahrzeugs beispielsweise ganz anzuheben. Dabei ist zweckmäßigerweise jeweils die Druckleitung P über das entsprechende Schaltventil 212 zwischen dem ersten Federspeicher 20 bzw. 22 und dem erfindungsgemäßen Dämpfungsventil 30 angeschlossen, während die Tankleitung T über das entsprechende Schaltventil 212 zwischen dem Zylinderraum 12 und dem Dämpfungsventil 30 angeschlossen ist. Hierdurch wird erreicht, daß auch eine durch Zuführen von Hydraulikmedium aus der Druckleitung P erzeugte Ausfederung gedämpft wird, während eine durch Ablassen von Medium zur Tankleitung T bewirkte Einfederung ungedämpft erfolgt.

Bei dem in Verbindung mit dem erfindungsgemäßen Federungssystem bevorzugt verwendeten Dämpfungsventil 30 gemäß Fig. 7 bis 10 ist gegenüber Dämpfungsventil der Fig. 1 und 2 noch von besonderem Vorteil, daß aufgrund der beidseitigen Druckbeaufschlagung des Steuerkolbens 140 der hydraulischen Verstelleinrichtung 138 nach Beendigung eines Ausfederungsvorgangs nur noch eine geringere Druckdifferenz zwischen dem Druck $p_2$ des Federspeichers 20/22 und dem Druck $p_1$ des Federbeins 2/4 verbleiben kann. Im Falle der Fig. 1 und 2 ist die Schließkraft relativ hoch, so daß sich auch ein relativ hoher Öffnungsdruck aufbauen muß, um das Drosselventil zu öffnen. Wird dieser Öffnungsdruck nicht mehr erreicht, bleibt die genannte Druckdifferenz bestehen, die bei einem nachfolgenden Einfedern erst überwunden werden muß, bevor Hydraulikmedium in den Federspeicher strömen kann. Dies führt zu einem "harten Anfedern". Da nun bei dem Dämpfungsventil gemäß Fig. 7 bis 10 bei Druckgleichgewicht zwischen $p_{St}$ und $p_2$ gar keine hydraulische Vorspannkraftkomponente entsteht, ist auch die Schließkraft nicht mehr so hoch, so daß eine geringere Öffnungskraft zum Öffnen des Drosselventils ausreicht. Es braucht somit bei einem nachfolgenden Einfedern allenfalls noch eine sehr geringe Druckdifferenz überwunden zu werden, was zu einem sehr komfortablen, "weichen" Anfedern in Einfederungsrichtung führt.

In den bisher beschriebenen Ausführungsformen des erfindungsgemäßen Federungssystems wurde hauptsächlich die Ausfederungsbewegung des jeweiligen Federbeins 2, 4 gedämpft, und zwar durch das erfindungsgemäße Prinzip des ständig alternierenden Sperrens und Öffnens des Strömungsweges der beim Ausfedern auftretenden Hydraulikströmung. Für bestimmte Anwendungsfälle kann es nun aber auch vorteilhaft sein, zusätzlich die beim Einfedern auftretende Strömung oder zumindest einen Teil dieser Strömung zu dämpfen, und zwar vorzugsweise ebenfalls durch das erfindungsgemäße Prinzip.

Wie sich aus Fig. 11 ergibt, in der der Einfachheit halber nur die "Hälfte" eines aus zwei Federbeinen 2, 4 bestehenden Federungssystems dargestellt ist, ist - ausgehend von dem Federungssystem gemäß Fig. 1 bzw. Fig. 7 - auch in der Verbindung zwischen dem Ringraum 14 des Federbeins 2 (4) und dem diesem zugeordneten Federspeicher 24 (26) ein erfindungsgemäßes Dämpfungsventil 30a angeordnet, welches in seinem konstruktiven Aufbau grundsätzlich einer beliebigen der bereits beschriebenen Ausführungen des Dämpfungsventils 30 bzw. 32 entspricht, dabei allerdings derart "umgekehrt" wirkend geschaltet ("gepolt") ist, daß die beim Einfedern auftretende Strömung aus dem Federspeicher 24 heraus in den Ringraum 14 hinein über das dann als "Einfederungsventil" 50a wirkende Ventil (vgl. hierzu Fig. 1 und 2) bzw. über das Drosselventil 114a (vgl. Fig. 7 bis 10) in der erfindungsgemäßen Weise durch alternierendes Sperren und Öffnen gedämpft wird. Beim Ausfedern fließt das Medium dann aus dem Ringraum 14 im wesentlichen ungedämpft über das dann als Ausfederungsventil 52a wirkende Rückschlagventil (vgl. Fig. 1 und 2) bzw. über das Rückschlagventil 124a (vgl. mit Fig. 7 bis 10) in den Federspeicher 24. Als Steuerdruck $p_{St}$ für das Dämpfungsventil 30a wird hierbei der hydraulische Druck des Speicherraums 98 des Federspeichers 24 verwendet.

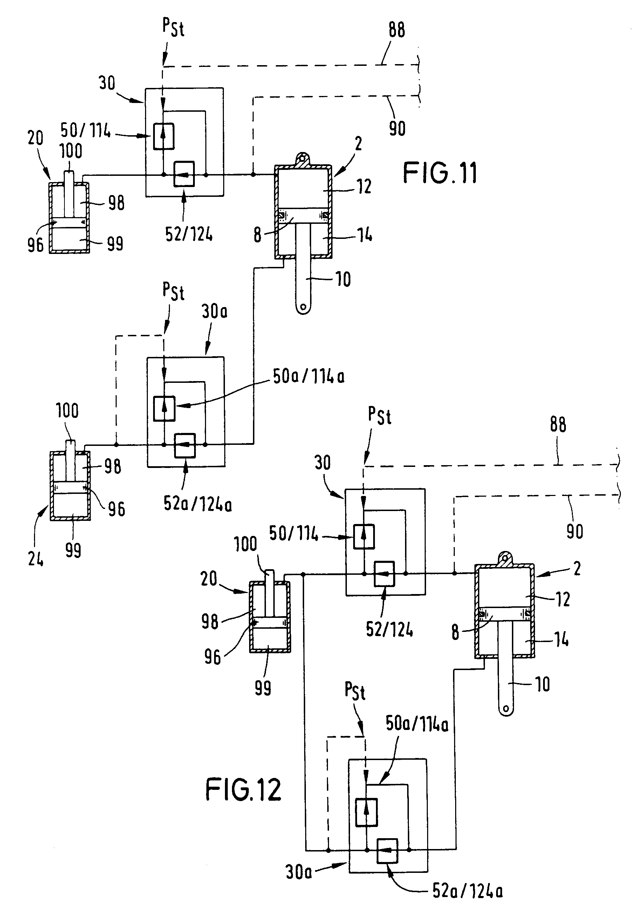

In der Ausführungsform gemäß Fig. 12 sind nun zunächst der Zylinderraum 12 und der Ringraum 14 des Federbeins 2 (4) mit demselben Federspeicher 20 (22) verbunden, wobei dann zwischen dem Zylinderraum 12 und dem Federspeicher ein - wie oben bereits beschrieben - in Ausfederungsrichtung wirkendes Dämpfungsventil 30 sowie vorzugsweise zusätzlich auch zwischen dem Ringraum 14 und dem Federspeicher 20 ein in Einfederungsrichtung wirkendes Dämpfungsventil 30a angeordnet sind. Dabei ist die Dämpfungsfunktion des Dämpfungsventils 30a analog zur Ausführung nach Fig. 11.

Bei den Ausführungen nach Fig. 11 und 12 wird somit der jeweils beim Einfedern in den Ringraum 14 hineinströmende Teil des insgesamt in Strömung versetzten Mediums nach dem erfindungsgemäßen Prinzip gedämpft, was zu der vorteilhaften Wirkung führt, daß die Federkennlinie des Federbeins - ausgehend von seiner statischen Lage - beim Einfedern überproportional ansteigt, da durch das erfindungsgemäße Dämpfungsprinzip der innerhalb des Ringraums 14 herrschende Druck rhythmisch wiederholt absinkt und wieder ansteigt; der Kolben 8 des Federbeins wird praktisch "hydraulisch abgebremst" bzw. zurückgehalten und dann sukzessive "nachgelassen". Diese Ausführung stellt sicher, daß sowohl ein weiches, komfortables Einfedern aus der statischen Lage heraus, d.h. ein sogenanntes "Anfedern", gewährleistet ist, als auch ein "Durchschlagen" des Federbeins in seinen Endanschlag wirksam verhindert wird.

Hinsichtlich einer Zusammenschaltung von zwei auf gegenüberliegenden Fahrzeugseiten angeordneten Federbeinen 2, 4 entsprechen die Ausführungen nach Fig. 11 und 12 denjenigen der Fig. 1 und 7, so daß auf die obige Beschreibung verwiesen werden kann. Die zusätzlichen Dämpfungsventile 30a für die Ringräume 14 sind dabei ebenfalls von Vorteil, da sie noch zu einer weiteren Verbesserung der Fahrzeug-Stabilisierung beitragen.

Die Erfindung ist nicht auf das dargestellte und beschriebene, bevorzugte Ausführungsbeispiel beschränkt, sondern umfaßt auch alle im Sinne der Ausprüche gleichwirkenden Ausführungen. Insbesondere ist darauf hinzuweisen, daß alternativ zu der in Fig. 1 dargestellten Ausführung, bei der die einer Achse zugeordneten Federbeine hinsichtlich ihrer Ansteuerung zusammengeschaltet sind, bei Fahrzeugen mit mehr als zwei Achsen die Verstellung der Dämpfungsventile von zwei hintereinanderliegenden Achsen auch "über Kreuz" erfolgen kann. Ebenfalls ist es denkbar, bei einem zweiachsigen, vierrädrigen Fahrzeug die Verstellung der Dämpfungsventile "über Kreuz" durchzuführen.

## Patentansprüche

1. Federungssystem insbesondere zur Radabstützung bei Kraftfahrzeugen, mit mindestens einem aus einem Zylinder (6) und einem in diesem zum Ein- und Ausfedern beweglich geführten, von einem Hydraulikmedium, insbesondere einem Öl, beaufschlagten Kolben (8) bestehenden Federbein (2,4), welches beim Einfedern gegen eine das nachfolgende Ausfedern bewirkende Federkraft wirkt, wobei das Hydraulikmedium zumindest während des Ausfederns über einen Strömungsweg eines Dämpfungsventils (30/32) geführt wird,

**dadurch gekennzeichnet,** daß während des Ausfederns des Federbeins (2/4) der Strömungsweg im Dämpfungsventil (30/32) ständig alternierend gesperrt und wieder geöffnet wird.

2. Federungssystem nach Anspruch 1,
**gekennzeichnet durch** eine Ausbildung als hydropneumatisches Federungssystem, wobei die Federkraft dadurch erzeugt wird, daß das Hydraulikmedium beim Ein- und Ausfedern über eine hydraulische Verbindung zwischen dem Federbein (2,4) und mindestens einem hydropneumatischen, ein kompressibles Medium enthaltenden Federspeicher (20/22) hin- und herströmt, wobei der Federspeicher (20/22) durch Kompression des kompressiblen Mediums einen hydraulischen Druck erzeugt, der in dem Federbein (2,4) durch die Beaufschlagung des Kolbens (8) die Federkraft bewirkt.

3. Federungssystem nach Anspruch 2,
**dadurch gekennzeichnet,** daß während des Ausfederns des Federbeins (2/4) in diesem und in dem Federspeicher (20/22) zwei zumindest zeitweise voneinander abweichende hydraulische Drücke ($p_1$, $p_2$) herrschen, wobei das Sperren und Öffnen der Verbindung (16/18) zwischen dem Federbein (2/4) und dem Federspeicher (20/22) vorzugsweise selbsttätig durch die jeweiligen, in dem Federbein (2/4) und dem Federspeicher (20/22) herrschenden hydraulischen Drücke ($p_1$, $p_2$) bzw. durch eine zwischen diesen auftretende Druckdifferenz gesteuert wird.

4. Federungssystem nach Anspruch 3,
**dadurch gekennzeichnet,** daß bei Druckgleichgewicht oder bei einem bestimmten, geringen Betrag einer Druckdifferenz die Verbindung (16/18) zwischen dem Federbein (2/4) und dem Federspeicher (20/22) gesperrt und bei zunehmender Druckdifferenz bei Erreichen eines insbesondere variablen Betrages der Druckdifferenz geöffnet wird.

5. Federungssystem nach einem oder mehreren der Ansprüche 2 bis 4,
**dadurch gekennzeichnet,** daß in der Verbindung (16/18) zwischen dem Federbein (2/4) und dem Federspeicher (20/22) ein Ausfederungsventil (50) angeordnet ist, welches ein in Schließrichtung mit einer Schließkraft und in Öffnungsrichtung mit einer Öffnungskraft beaufschlagtes Ventilelement (58) aufweist, wobei die Öffnungskraft durch Beaufschlagung einer ersten Druckfläche (62) des Ventilelementes (58) mit dem hydraulischen Druck ($p_2$) des Federspeichers (20/22) erzeugt wird, und wobei die Schließkraft zumindest teilweise durch Beaufschlagung einer zweiten Druckfläche (64) des Ventilelementes (58) mit dem hydraulischen Druck ($p_1$) des Federbeins (2/4) erzeugt wird.

6. Federungssystem nach Anspruch 5,
**dadurch gekennzeichnet,** daß die erste Druckfläche (62) des Ventilelementes (58) flächenmäßig kleiner als die zweite Druckfläche (64) ist.

7. Federungssystem nach Anspruch 5 oder 6,
**dadurch gekennzeichnet,** daß sich die Schließkraft aus einer durch den hydraulischen Druck ($p_1$) des Federbeins (2/4) erzeugten Kraftkomponente und einer mittels einer Vorspanneinrichtung (66) erzeugten Vorspannkraft zusammensetzt.

8. Federungssystem nach einem oder mehreren der Ansprüche 2 bis 7,
**dadurch gekennzeichnet,** daß in der Verbindung (16/18) zwischen dem Federbein (2/4) und dem Federspeicher (20/22) ein Einfederungsventil (52) angeordnet ist, welches derart als Rückschlagventil ausgebildet ist, daß es eine beim Einfedern auftretende Strömung des Hydraulikmediums im wesentlichen ungedrosselt durchläßt und bei einer umgekehrten Strömungsrichtung druckdicht schließt.

9. Federungssystem nach einem oder mehreren der Ansprüche 3 bis 8,
**dadurch gekennzeichnet,** daß während des Ausfederns des Federbeins (2/4) die das Sperren und Öffnen steuernde Druckdifferenz zeitweise dadurch vergrößert wird, daß der von dem Federspeicher (20, 22) bewirkte, statische Druck ($p_2$) des strömenden Hydraulikmediums durch eine bereichsweise Erhöhung von dessen Strömungsgeschwindigkeit partiell vermindert wird.

10. Federungssystem nach Anspruch 9,
dadurch gekennzeichnet, daß in der Verbindung (16/18) zwischen dem Federbein (2/4) und dem Federspeicher (20/22) in einem Strömungskanal (112) mindestens ein aus einem Ventilkörper (116) und einem Ventilsitz (118) bestehendes Drosselventil (114) angeordnet ist, wobei der Ventilkörper (116) zwischen einer auf dem Ventilsitz (118) liegenden Schließlage und einer von dem Ventilsitz (118) abgehobenen Öffnungslage beweglich ist, und wobei in einem auf der in Schließrichtung weisenden Seite des Ventilkörpers (116) liegenden Bereich ein verengter Drosselspalt (130) mit einem maximalen Querschnitt derart gebildet ist, daß in diesem Bereich innerhalb des in der Öffnungslage des Ventilkörpers (116) durch den Strömungskanal (112) strömenden Mediums eine erhöhte Strömungsgeschwindigkeit und hierdurch eine partielle Druckverminderung derart auftritt, daß hierdurch der Ventilkörper (116) bei vorgegebenen Flächen- und Druckverhältnissen in seine Schließlage gebracht wird.

11. Federungssystem nach Anspruch 10,
dadurch gekennzeichnet, daß der Ventilkörper (116) in Schließrichtung mit einer Schließkraft und in Öffnungsrichtung mit einer Öffnungskraft beaufschlagt ist, wobei die Öffnungskraft durch Beaufschlagung einer ersten Druckfläche (132) des Ventilkörpers (116) mit einem Öffnungsdruck ($p_3$) des hydraulischen Mediums erzeugt wird, und wobei die Schließkraft zumindest teilweise durch Beaufschlagung einer zweiten, gegenüberliegenden Druckfläche (134) des Ventilkörpers (116) mit einem Schließdruck ($p_4$) des hydraulischen Mediums erzeugt wird.

12. Federungssystem nach Anspruch 11,
dadurch gekennzeichnet, daß der Öffnungsdruck ($p_3$) zeitweise dem Druck ($p_2$) des Federspeichers (20/22) entspricht und zeitweise durch die Erhöhung der Strömungsgeschwindigkeit demgegenüber verringert ist, und daß der Schließdruck ($p_4$) zumindest zeitweise dem Druck ($p_1$) des Federbeins (2/4) entspricht.

13. Federungssystem nach Anspruch 11 oder 12,
dadurch gekennzeichnet, daß die erste Druckfläche (132) des Ventilkörpers (116) in der Schließlage flächenmäßig kleiner als die zweite Druckfläche (134) ist.

14. Federungssystem nach einem oder mehreren der Ansprüche 11 bis 13,
dadurch gekennzeichnet, daß sich die Schließkraft aus einer ersten, durch die Beaufschlagung der zweiten Druckfläche (134) mit dem Schließdruck ($p_4$) erzeugten Kraftkomponente und einer mittels einer Vorspanneinrichtung (136) erzeugten, elastischen Vorspannkraft zusammensetzt.

15. Federungssystem nach einem oder mehreren der Ansprüche 7 bis 14,
dadurch gekennzeichnet, daß die Vorspannkraft insbesondere mechanisch auf einen Minimalwert voreinstellbar ist.

16. Federungssystem nach einem oder mehreren der Ansprüche 7 bis 15,
dadurch gekennzeichnet, daß die Höhe der Vorspannkraft mittels einer insbesondere hydraulischen Verstelleinrichtung (86/138) variabel ist, wobei die Verstelleinrichtung (86/138) vorzugsweise einen derart mit einem Steuerdruck ($p_{st}$) beaufschlagbaren Stößel bzw. Steuerkolben (140) aufweist, daß eine Erhöhung des Steuerdruckes ($p_{st}$) eine Erhöhung der Vorspannkraft bewirkt.

17. Federungssystem nach Anspruch 16,
dadurch gekennzeichnet, daß als Steuerdruck ($p_{St}$) der hydraulische Druck ($p_1$) eines in einem Fahrzeug insbesondere auf der dem Federbein (2/4) gegenüberliegenden Fahrzeugseite angeordneten, weiteren Federbeins (4/2) verwendet wird.

18. Federungssystem nach Anspruch 16 oder 17,
dadurch gekennzeichnet, daß der Steuerkolben (140) der Verstelleinrichtung (138) eine erste, von dem Steuerdruck ($p_{st}$) beaufschlagte Druckfläche (142) sowie vorzugsweise eine zweite, gegenüberliegende, von dem Schließdruck ($p_4$) beaufschlagte Druckfläche (144) aufweist, wobei beide Druckflächen (142, 144) vorzugsweise gleich groß ausgebildet sind.

19. Federungssystem nach einem oder mehreren der Ansprüche 10 bis 18,
dadurch gekennzeichnet, daß der maximale Drosselspalt (130) in der Öffnungslage des Ventilkörpers

(116) zumindest teilweise zwischen diesem und dem Ventilsitz (118) gebildet ist und insbesondere durch einen mechanischen Anschlag (146) einstellbar bzw. begrenzbar ist.

20. Federungssystem nach einem oder mehreren der Ansprüche 10 bis 20,
   **dadurch gekennzeichnet,** daß der Strömungskanal (112) einen sich in Strömungsrichtung derart vor dem Drosselventil (114) kontinuierlich bis auf den Querschnitt des Drosselspaltes (130) verkleinernden und hinter dem Drosselventil (130) wieder kontinuierlich vergrößernden Querschnitt aufweist, daß die Strömung über den Drosselspalt (130) zumindest annähernd laminar und wirbelfrei ist.

21. Federungssystem nach einem oder mehreren der Ansprüche 10 bis 20,
   **dadurch gekennzeichnet,** daß der Strömungskanal (112) und der Drosselspalt (130) im Bereich des Ventilkörpers (116) derart ausgebildet sind, daß die Entstehung einer in Öffnungsrichtung auf den Ventilkörper (116) wirkenden Impulskraft zumindest weitgehend vermieden wird.

22. Federungssystem nach einem oder mehreren der Ansprüche 10 bis 21,
   **dadurch gekennzeichnet,** daß das Drosselventil (114) in einem Ventilgehäuse (102) eines Dämpfungsventils (30) in dem eine erste Druckkammer (104) und eine zweite Druckkammer (106) verbindenden Strömungskanal (112) angeordnet ist, wobei in die erste Druckkammer (104) ein erster Anschluß (108) mündet sowie in die zweite Druckkammer (106) ein zweiter Anschluß (110), wobei die Anschlüsse (108, 110) und die Druckkammern (104, 106) im wesentlichen fluchtend auf einer Längsachse (120) liegend angeordnet sind, und wobei der Strömungskanal (112) in Richtung einer zu der Längsachse (120) zumindest annähernd senkrechten Querachse (122) aus der ersten Druckkammer (104) abzweigt, hinter dem auf der Querachse (122) liegend angeordneten Drosselventil (114) zweimal um jeweils zumindest annähernd 90° zurück in Richtung der Längsachse (120) abgewinkelt ist und in die zweite Druckkammer (106) mündet.

23. Federungssystem nach einem oder mehreren der Ansprüche 10 bis 22,
   **gekennzeichnet durch** ein hydraulisch zu dem Drosselventil (114) parallel geschaltetes, hinsichtlich der Strömungsrichtung gegensinnig wirkendes, vorzugsweise ebenfalls in dem Ventilgehäuse (102) des Dämpfungsventils (30) angeordnetes Rückschlagventil (124).

24. Federungssystem nach Anspruch 23,
   **dadurch gekennzeichnet,** daß das Rückschlagventil (124) ein scheibenförmiges, mit einem Ventilsitz (126) zusammenwirkendes und mit einer derart geringen, federelastischen Vorspannkraft in Schließrichtung beaufschlagtes Ventilelement (128) aufweist, daß es bei einer hydraulischen Strömung von der zweiten Druckkammer (106) zu der ersten Druckkammer (104) im wesentlichen ohne Drosselwirkung öffnet und bei einer umgekehrten Strömungsrichtung schließt.

25. Federungssystem nach Anspruch 23 oder 24,
   **dadurch gekennzeichnet,** daß das Rückschlagventil (124) derart unmittelbar zwischen der ersten und der zweiten Druckkammer (104, 106) auf der Längsachse (120) liegend angeordnet ist, daß die Strömung über das Rückschlagventil (124) im wesentlichen geradlinig in Richtung der Längsachse (120) verläuft.

26. Federungssystem nach einem oder mehreren der Ansprüche 2 bis 25,
   **dadurch gekennzeichnet,** daß der Kolben (8) des Federbeins (2/4) innerhalb des Zylinders (6) einen lasttragenden, über die Verbindung (16, 18) mit dem Federspeicher (20/22) verbundenen Zylinderraum (12) von einem eine Kolbenstange (10) umschließenden Ringraum (14) trennt.

27. Federungssystem nach Anspruch 26,
   **dadurch gekennzeichnet,** daß der mit Hydraulikmedium gefüllte Ringraum (14) vorzugsweise hydraulisch unabhängig von dem Zylinderraum (12) mit einem separaten Federspeicher (24/26) verbunden ist, wobei in der Verbindung zwischen dem Zylinderraum (12) und dem zugehörigen Federspeicher (20/22) ein in Ausfederungsrichtung wirkendes Dämpfungsventil (30/32) und vorzugsweise in der Verbindung zwischen dem Ringraum (14) und dem zugehörigen Federspeicher (24/26) ein in Einfederungsrichtung wirkendes Dämpfungsventil (30a) angeordnet sind.

**28.** Federungssystem nach Anspruch 26,

**dadurch gekennzeichnet,** daß der Zylinderraum (12) und der Ringraum (14) mit demselben Federspeicher (20/22) verbunden sind, wobei zwischen dem Zylinderraum (12) und dem Federspeicher (20/22) ein in Ausfederungsrichtung wirkendes Dämpfungsventil (30/32) und vorzugsweise zwischen dem Ringraum (14) und dem Federspeicher (20/22) ein in Einfederungsrichtung wirkendes Dämpfungsventil (30a) angeordnet sind.

**29.** Federungssystem nach einem oder mehreren der Ansprüche 2 bis 28,

**dadurch gekennzeichnet,** daß der bzw. jeder Federspeicher (20/22; 24/26) als Kolben-Druckwandler mit einem schwimmend geführten, zwei unterschiedlich große Druckflächen aufweisenden Trennkolben (96) ausgebildet ist, wobei der Trennkolben (96) einen mit dem Federbein (2/4) hydraulisch verbundenen Speicherraum (98) von einer das kompressible Medium enthaltenden Federkammer (99) trennt und der pneumatische Druck innerhalb der Federkammer (99) stets geringer als der hydraulische Druck innerhalb des Speicherraums (98) ist.

**30.** Federungssystem nach einem oder mehreren der Ansprüche 1 bis 29,

**dadurch gekennzeichnet,** daß das Federbein (2/4), insbesondere dessen Zylinderraum (12), über Schaltventile (212) wahlweise mit einer hydraulischen Druckleitung (P) oder einer Tankleitung (T) verbindbar ist, wobei vorzugsweise die Tankleitung (T) zwischen dem Federbein (2/4) und dem Dämpfungsventil (30) angeschlossen ist und die Druckleitung (P) zwischen dem Dämpfungsventil (30) und dem zugehörigen Federspeicher (20/22).

**31.** Dämpfungsventil (30/32), insbesondere zur Verwendung in einem Federungssystem nach einem oder mehreren der vorhergehenden Ansprüche, mit einem in einem Strömungskanal für ein Hydraulikmedium angeordneten Ventilelement (58, 116),

**dadurch gekennzeichnet,** daß das Ventilelement (58, 116) derart ausgebildet und in dem Strömungskanal angeordnet ist, daß es in einer Strömungsrichtung des Hydraulikmediums den Strömungskanal ständig alternierend sperrt und wieder öffnet.

**32.** Dämpfungsventil nach Anspruch 31,

**dadurch gekennzeichnet,** daß das Sperren und Öffnen selbsttätig durch zwei in entgegengesetzte Richtungen auf das Ventilelement (58, 116) wirkende Drücke ($p_1$, $p_2$) bzw. eine zwischen diesen auftretende Druckdifferenz gesteuert wird.

**33.** Dämpfungsventil nach Anspruch 31 oder 32,

**dadurch gekennzeichnet,** daß das Ventilelement (58, 116) zwischen einer auf einem Ventilsitz (118) liegenden Schließlage und einer von dem Ventilsitz (118) abgehobenen Öffnungslage beweglich ist, wobei in einem auf der in Schließrichtung weisenden Seite des Ventilelementes (116) liegenden Bereich ein verengter Drosselspalt (130) mit einem maximalen Querschnitt derart gebildet ist, daß in diesem Bereich innerhalb des in der Öffnungslage des Ventilelementes (116) durch den Strömungskanal (112) strömenden Mediums eine erhöhte Strömungsgeschwindigkeit und hierdurch eine partielle Druckverminderung derart auftritt, daß hierdurch das Ventilelement (116) bei vorgegebenen Flächen- und Druckverhältnissen in seine Schließlage gebracht wird.

**Claims**

**1.** Suspension system particularly for wheel support in motor vehicles, comprising at least one spring leg (2/4) comprising at least one cylinder (6) and a piston (8) moving therein for contraction and extension driven by a hydraulic medium, in particular an oil, which during contraction acts against a spring force causing the subsequent extension, and wherein at least during extension the hydraulic medium passes through the flow path of a damping valve (30/32), characterised in that during the extension of the spring leg (2/4) the flow path in the damping valve (30, 32) is continuously alternately blocked and reopened.

**2.** A suspension system according to claim 1, wherein the suspension system is a hydropneumatic suspension system, wherein the spring force is produced by the hydraulic medium flowing back and forth during retraction and extension, via a hydraulic connection between the spring leg (2/4) and at least one hydropneumatic spring reservoir (20/22) containing a compressible medium, wherein the spring reservoir (20/22) produces a hydraulic pressure through compression of the compressible medium and the pressure is applied to the piston (8) to cause the spring force in the spring leg (2/4).

3. A suspension system according to claim 2, characterised in that during the extension of the spring leg (2/4) two at least temporarily differing hydraulic pressures (p1, p2) prevail in said spring leg (2/4) and in the spring reservoir (20/22), wherein the blocking and opening of the connection (16/18) between the spring leg (2/4) and the spring reservoir (20/22) are preferably controlled either by means of the particular hydraulic pressures (p1, p2) prevailing in the spring leg (2/4) and the spring reservoir (20/22), or by means of a pressure differential occurring between these two pressures.

4. A suspension system according to claim 3, characterised in that at pressure equilibrium, or at a particular small value of the pressure differential, the connection (16/18) between the spring leg (2/4) and the spring reservoir (20/22) is blocked, and as the pressure differential increases the connection will be opened once a particular value of the pressure differential is reached.

5. A suspension system according to one or more of claims 2 to 4, characterised in that in the connection (16/18) between the spring leg (2/4) and the spring reservoir (20/22) there is an extension valve (50) which has a valve element (58) with a closing force applied in the closing direction and an opening force applied in the opening direction, wherein the opening force is produced by application of the hydraulic pressure (p2) of the spring reservoir (20/22) onto a first pressure surface (62) of the valve element (58), and wherein the closing force is produced, at least in part, by application of the hydraulic pressure (p1) of the spring leg (2/4) onto a second pressure surface (64) of the valve element (58).

6. A suspension system according to claim 5, characterised in that the first pressure surface (62) of the valve element (58) has a smaller area than the second pressure surface (64).

7. A suspension system according to claim 5 or 6, characterised in that the closing force is composed of a force component produced by the hydraulic pressure (p1) of the spring leg (2/4), and an initial tensioning force produced by means of an initial tensioning device (66).

8. A suspension system according to one or more of claims 2 to 7, characterised in that in the connection (16/18) between the spring leg (2/4) and the spring reservoir (20/22) there is a retraction valve (52), designed as a non-return valve in such a way that it allows the flow of hydraulic medium occurring during retraction to flow through essentially unthrottled, and closes pressure-tight when the direction of flow is reversed.

9. A suspension system according to one or more of claims 3 to 8, characterised in that during the extension of the spring leg (2/4), the pressure differential controlling the opening and blocking is temporarily increased in that the static pressure (p2) of the flowing hydraulic medium caused by the spring reservoir (20/22) will be partly reduced by a regional increase in its speed of flow.

10. A suspension system according to claim 9, characterised in that in the connection (16/18) between the spring leg (2/4) and the spring reservoir (20/22) there is in a flow channel (112) at least one throttle valve (114) comprising a valve element (116) and a valve seat (118), wherein the valve element (116) can move between a closed position located on the valve seat (118) and an open position raised off the valve seat (118), and wherein a tapered throttle gap (130) with a maximum cross section is located in one side of the valve element (116) pointing in the closed direction, so that in this region, which has a medium flowing through the flow channel (112), when the valve element (116) is in the open position an increased rate of flow and thereby a partial reduction in pressure occurs such that the valve element (116) is brought into its closed position under specified surface and pressure conditions.

11. A suspension system according to claim 10, characterised in that the valve element (116) has a closing force applied in the closed direction, and an opening force applied in the open direction, wherein the opening force is generated by application of a hydraulic medium with an opening pressure (p3) onto a first pressure surface (132) of the valve element (116), and wherein the closing force is produced at least in part by the application of pressure to a second opposing pressure surface (134) of the valve element (116) with a closing pressure (p4) of the hydraulic medium.

**12.** A suspension system according to claim 11, characterised in that the opening pressure (p3) temporarily corresponds to the pressure (p2) of the spring reservoir (20/22) and is temporarily reduced by the increase in the rate of flow, and in that the closing pressure (p4) at least temporarily corresponds to the pressure (p1) of the spring leg (2/4).

**13.** A suspension system according to claim 11 or 12, characterised in that the first pressure surface (132) of the valve element (116) has a smaller area than the second pressure surface (134) in the closed position.

**14.** A suspension system according to one of claims 11 to 13, characterised in that the closing force is composed of a first force component produced by the application of the closing pressure (p4) onto the second pressure surface (134), and an elastic initial tension force produced by an initial tensioning device (136).

**15.** A suspension system according to one or more of claims 7 to 14, characterised in that the initial tensioning force can be pre-adjusted by preferably mechanical means to a minimum value.

**16.** A suspension system according to one or more of claims 7 to 15, characterised in that the level of the initial tensioning force may be varied by means of a hydraulic adjusting mechanism (86/138), wherein the adjusting mechanism (86/138) has preferably a driven plunger or control piston (140) acted upon by a control pressure (pst) such that an increase in the control pressure (pst) will cause an increase in the initial tensioning force.

**17.** A suspension system according to claim 16, characterised in that the hydraulic pressure (p1) of another spring leg (4/2) located in a vehicle, in particular on the side of the vehicle opposite the first-mentioned spring leg (2/4), is used as the control pressure (pst).

**18.** A suspension system according to claim 16 or 17, characterised in that the control piston (140) of the adjusting mechanism (138) has a first pressure surface (142) to which control pressure (pst) is applied, and also preferably a second opposing pressure surface (144) to which a closing force (p4) is applied, wherein both pressure surfaces (142, 144) are preferably of the same size.

**19.** A suspension system according to one or more of claims 10 to 18, characterised in that the maximum throttle gap (130) in the open position of the valve element (116) is formed at least in part between the latter and the valve seat (118) and in particular is adjustable or limitable by a mechanical stop (146).

**20.** A suspension system according to one or more of claims 10 to 20, characterised in that the flow channel (112) has a cross section in the flow direction which tapers continually in front of the throttle valve (114) down to the cross section of the throttle gap (130) and after the throttle valve (130) has a continually enlarging cross section so that the flow through the throttle gap (130) is at least nearly laminar and free from eddies.

**21.** A suspension system according to one or more of claims 10 to 20, characterised in that the flow channel (112) and the throttle gap (130) in the vicinity of the valve element (116) are designed such that the generation of a pulse force acting in the opening direction on the valve element (116) is at least largely avoided.

**22.** A suspension system according to one or more of claims 10 to 21, characterised in that the throttle valve (114) is located in a valve housing (102) of a damping valve (30) in a flow channel (112) linking a first pressure chamber (104) and a second pressure chamber (106), wherein a first connection (108) opens into the pressure chamber (104) and a second connection (110) opens into the second pressure chamber (106), wherein the connections (108, 110) and the pressure chambers (104, 106) are positioned essentially aligned on a longitudinal axis (120), and wherein the flow channel (112) branches off in the direction of a transverse axis (122) at least approximately perpendicular to the longitudinal axis (120) from the first pressure chamber (104), and is angled twice through at least approximately 90 degrees behind the throttle valve (114) positioned on the transverse axis (122) back in the direction of the longitudinal axis (120) and opens into the second pressure chamber (106).

23. A suspension system according to one or more of claims 10 to 22, characterised by a hydraulic non-return valve connected in parallel to the throttle valve (114) and acting oppositely with regard to the direction of flow, and also preferably located in the valve housing (102) of the damping valve (30).

24. A suspension system according to claim 23, characterised in that the non-return valve (124) has a disc shaped valve element (128) cooperating with a valve seat (126) and having a small elastic initial tensioning force applied in the closing direction, such that it opens essentially without any throttle effect when there is hydraulic flow from the second pressure chamber (106) to the first pressure chamber (104), and that it closes when the direction of flow is reversed.

25. A suspension system according to claim 23 or 24, characterised in that the non-return valve (124) is positioned directly between the first and the second pressure chamber (104,106) on the longitudinal axis (120) in such a manner that the flow via the non-return valve runs essentially in a straight line in the direction of the longitudinal axis (120).

26. A supension system according to one or more of claims 2 to 25, characterised in that the piston (8) of the spring leg (2/4) within the cylinder (6) divides a loadbearing cylinder space (12) connected to the spring reservoir (20/22) via the connection (16, 18) from an annular space (14) enveloping a piston rod (10).

27. A suspension system according to claim 26, characterised in that the annular space (14) filled with hydraulic medium is connected preferably hydraulically and independently of the cylinder space (12), with a separate spring reservoir (24/26), wherein in the connection between the cylinder space (12) and the corresponding spring reservoir (20/22) there is a damping valve (30/32) acting in the direction of extension, and there is a damping valve (30a) acting in the direction of retraction preferably in the connection between the annular space (14) and the corresponding spring reservoir (24/26).

28. A suspension system according to claim 26, characterised in that the cylinder space (12) and the annular space (14) are connected to the same spring reservoir (20/22), wherein between the cylinder space (12) and the spring reservoir (20/22) there is a damping valve (30/32) acting in the extension direction, and preferably between the annular space (14) and the spring reservoir (20/22) there is a damping valve (30a) acting in the direction of retraction.

29. A suspension system according to one or more of claims 2 to 28, characterised in that the, or each, spring reservoir (20/22; 24/26) is designed as a piston-pressure converter with a floating separating piston (96) having two different sized pressure surfaces, wherein the separating piston (96) separates a reservoir chamber (98) connected hydraulically to the spring leg (2/4) from a spring chamber (99) containing the compressible medium, and the pneumatic pressure within the spring chamber (99) is always less than the hydraulic pressure within the reservoir chamber (98).

30. A suspension system according to one or more of claims 1 to 29, characterised in that the spring leg (2/4), in particular its cylinder space (12), can be connected via switch valves (212) optionally with a hydraulic pressure line (P) or with a tank line (T), wherein the tank fine (T) is connected between the spring leg (2/4) and the damping valve (30) and the pressure line (P) is connected between the damping valve (30) and the corresponding spring reservoir (20/22).

31. A damping valve (30/32), in particular for use in a suspension system according to one or more of the foregoing claims including a valve element (58, 116) located in a flow channel for a hydraulic medium, characterised in that the valve element (58, 116) is positioned in the flow channel and continually and alternately blocks and reopens the flow channel in one flow direction of the hydraulic medium.

32. A damping valve according to claim 31, characterised in that the blocking and reopening of said flow channel are controlled automatically by two pressures (p1, p2) acting in opposing directions on the valve element (58, 116), or by a pressure differential occurring between the two pressures.

33. A damping valve according to claim 31 or 32, characterised in that the valve element (58, 116) can move between a closed position located on a valve seat (118), and an opening position raised off the valve seat (118), wherein in a region lying on the side of the valve element (116) pointing in the closed direction, a tapered throttle gap (130) with a maximum cross section is configured in such a manner that in this region the hydraulic medium flowing through the flow channel (112) when the valve element (116) is in the open position, causes an elevated rate of flow and a partial reduction in pressure, so that at specific ratios of the surface area to pressure the valve element (116) will be brought into its closed position.

**Revendications**

1. Système de suspension, en particulier pour le soutien de roues dans des véhicules à moteur, avec au moins une jambe de force à ressort (2, 4) constituée d'un cylindre (6) et d'un piston (8) guidé en déplacement dans celui-ci pour l'extension et la compression du ressort et mis sous charge par un agent hydraulique, en particulier une huile, laquelle jambe de force agit lors de la compression contre une force de ressort provoquant l'extension qui s'ensuit, l'agent hydraulique étant guidé au moins pendant l'extension par une voie d'écoulement d'une soupape d'amortissement (30/32), caractérisée en ce que, pendant l'extension de la jambe de force à ressort (2/4), la voie d'écoulement dans la soupape d'amortissement (30/32) est en permanence et en alternance fermée puis de nouveau ouverte.

2. Système de suspension selon la revendication 1, caractérisé par une conformation en tant que système de suspension hydropneumatique, la force du ressort étant produite par le fait que l'agent hydraulique, lors de la compression et de l'extension du ressort, s'écoule en va-et-vient par l'intermédiaire d'une liaison hydraulique entre la jambe de force à ressort (2,4) et au moins un réservoir de ressort (20/22) hydropneumatique comprenant un agent compressible, le réservoir de ressort (20/22) produisant par compression du milieu compressible une pression hydraulique qui provoque la force de ressort dans la jambe de force à ressort (2,4) par le chargement du piston (8).

3. Système de suspension selon la revendication 2, caractérisé en ce que, pendant l'extension du ressort de la jambe de force à ressort (2/4), deux pressions hydrauliques ($p_1$, $p_2$) différentes l'une de l'autre au moins temporairement règnent dans celle-ci et dans le réservoir de ressort (20/22), la fermeture et l'ouverture de la liaison (16/18) entre la jambe de force à ressort (2/4) et le réservoir de ressort (20/22) étant commandée de préférence automatiquement par les pressions hydrauliques respectives ($p_1$, $p_2$) régnant dans la jambe de force à ressort (2/4) et le réservoir de ressort (20/22) ou par une différence de pression existant entre elles.

4. Système de suspension selon la revendication 3, caractérisé en ce que, en cas d'équilibre de pression ou pour une certaine valeur faible d'une différence de pression, la liaison (16/18) entre la jambe de force à ressort (2/4) et le réservoir de ressort (20/22) est fermée, et qu'elle est ouverte pour une différence de pression croissante lorsqu'on atteint une valeur en particulier variable de la différence de pression.

5. Système de suspension selon l'une ou plusieurs des revendications 2 à 4, caractérisé en ce que, dans la liaison (16/18) entre la jambe de force à ressort (2/4) et le réservoir de ressort (20/22), est placée une soupape d'extension de ressort (50), qui présente un élément de soupape (58) chargé dans la direction de fermeture avec une force de fermeture et dans la direction d'ouverture avec une force d'ouverture, la force d'ouverture étant produite par chargement d'une première surface de pression (62) de l'élément de soupape (58) avec la pression hydraulique ($p_2$) du réservoir de ressort (20/22), et la force de fermeture étant produite au moins en partie par chargement d'une deuxième surface de pression (64) de l'élément de soupape (58) avec la pression hydraulique ($p_1$) de la jambe de force à ressort (2/4).

6. Système de suspension selon la revendication 5, caractérisé en ce que la première surface de pression (62) de l'élément de soupape (58) est d'une surface plus petite que celle de la deuxième surface de pression (64).

7. Système de suspension selon la revendication 5 ou 6, caractérisé en ce que la force de fermeture se compose d'une composante de force produite par la pression hydraulique ($p_1$) de la jambe de force à ressort (2/4) et d'une force de précharge produite au moyen d'un dispositif de précharge (66).

8. Système de suspension selon l'une ou plusieurs des revendications 2 à 7, caractérisé en ce que, dans la liaison (16/18) entre la jambe de force à ressort (2/4) et le réservoir de ressort (20/22), est placée une soupape de compression de ressort (52), qui est constituée comme soupape de retenue de telle manière qu'elle laisse passer pour l'essentiel sans étranglement un écoulement de l'agent hydraulique se produisant lors de la compression du ressort et se ferme de manière étanche à la pression pour une direction inverse de l'écoulement.

9. Système de suspension selon l'une ou plusieurs des revendications 3 à 8, caractérisé en ce que, pendant la compression de la jambe de force à ressort (2/4), la différence de pression commandant l'ouverture et la fermeture est augmentée temporairement par le fait que la pression statique ($p_2$), provoquée par le réservoir de ressort (20, 22), de l'agent hydraulique en écoulement est diminuée partiellement par une augmentation par zones de sa vitesse d'écoulement.

10. Système de suspension selon la revendication 9, caractérisé en ce que, dans la liaison (16/18) entre la jambe de force à ressort (2/4) et le réservoir de ressort (20/22), dans un conduit d'écoulement (112), il est placé au moins une soupape à étranglement (114) constituée d'un corps de soupape (116) et d'un siège de soupape (118), le corps de soupape (116) étant mobile entre une position de fermeture située sur le siège de soupape (118) et une position d'ouverture soulevée du siège de soupape (118), et une fente d'étranglement rétrécie (130) étant formée dans une zone située sur une face du corps de soupape (116) tournée dans la direction de fermeture, avec une section maximale telle qu'il apparaisse dans cette zone, à l'intérieur de l'agent s'écoulant à travers le conduit d'écoulement (112) dans la position ouverte du corps de soupape (116), une vitesse d'écoulement accrue et ainsi une réduction partielle de la pression, de telle sorte qu'ainsi le corps de soupape (116), pour des conditions de pression et de surface prédéterminées, est amené dans sa position de fermeture.

11. Système de suspension selon la revendication 10, caractérisé en ce que le corps de soupape (116) est chargé dans la direction de fermeture avec une force de fermeture et dans la direction d'ouverture avec une force d'ouverture, la force d'ouverture étant produite par chargement d'une première surface de pression (132) du corps de soupape (116) avec une pression d'ouverture ($p_3$) de l'agent hydraulique, et la force de fermeture étant produite au moins en partie par chargement d'une deuxième surface de pression (134), opposée à la première, du corps de soupape (116) avec une pression de fermeture ($p_4$) de l'agent hydraulique.

12. Système de suspension selon la revendication 11, caractérisé en ce que la pression d'ouverture ($p_3$) correspond temporairement à la pression ($p_2$) du réservoir de ressort (20/22) et est temporairement réduite par rapport à celle-ci par augmentation de la vitesse d'écoulement, et en ce que la pression de fermeture ($p_4$) correspond au moins temporairement à la pression ($p_1$) de la jambe de force à ressort (2/4).

13. Système de suspension selon la revendication 11 ou 12, caractérisé en ce que la première surface de pression (132) du corps de soupape (116), dans la position de fermeture, est d'une surface plus petite que la deuxième surface de pression (134).

14. Système de suspension selon l'une ou plusieurs des revendications 11 à 13, caractérisé en ce que la force de fermeture se compose d'une première composante de force produite par chargement de la deuxième surface de pression (134) avec la pression de fermeture ($p_4$) et d'une force de précharge élastique produite au moyen d'un dispositif de précharge (136).

15. Système de suspension selon l'une ou plusieurs des revendications 7 à 14, caractérisé en ce que la force de précharge peut être préréglée en particulier mécaniquement à une valeur minimale.

16. Système de suspension selon l'une ou plusieurs des revendications 7 à 15, caractérisé en ce que l'intensité de la force de précharge est variable au moyen d'un dispositif de réglage (86/138) en particulier hydraulique, le dispositif de réglage (86/138) présentant de préférence un plongeur ou piston de commande (140) pouvant être chargé avec une pression de commande ($p_{st}$), de telle manière qu'une augmentation de la pression de commande ($p_{st}$) provoque une augmentation de la force de précharge.

17. Système de suspension selon la revendication 16, caractérisé en ce que, comme pression de commande ($p_{st}$), on utilise la pression hydraulique ($p_1$) d'une autre jambe de force (4/2) placée dans un véhicule, en particulier du côté du véhicule opposé à la jambe de force (2/4).

18. Système de suspension selon la revendication 16 ou 17, caractérisé en ce que le piston de commande (140) du dispositif de réglage (138) présente une première surface de pression (142) chargée par la pression de commande ($p_{st}$), ainsi que de préférence une deuxième surface de pression (144), opposée à la première, chargée par la pression de fermeture ($p_4$), les deux surfaces de pression (142, 144) étant de préférence conformées avec la même taille.

19. Système de suspension selon l'une ou plusieurs des revendications 10 à 18, caractérisé en ce que la fente d'étranglement maximale (130) dans la position d'ouverture du corps de soupape (116) est formée au moins en partie entre celui-ci et le siège de soupape (118) et peut être réglée ou limitée en particulier par une butée mécanique (146).

20. Système de suspension selon l'une ou plusieurs des revendications 10 à 20, caractérisé en ce que le conduit d'écoulement (112) présente une section se réduisant continûment avant la soupape à étranglement (114), dans la direction d'écoulement, jusqu'à la section de la fente d'étranglement (130), puis augmentant de nouveau continûment derrière la soupape à étranglement (130), de telle manière que l'écoulement est au moins approximativement laminaire et exempt de turbulences au niveau de la fente d'étranglement (130).

21. Système de suspension selon l'une ou plusieurs des revendications 10 à 20, caractérisé en ce que le conduit d'écoulement (112) et la fente d'étranglement (130) sont, au niveau du corps de soupape (116), conformés de telle manière que la formation d'une force d'impulsion agissant dans la direction d'ouverture sur le corps de soupape (116) est au moins largement évitée.

22. Système de suspension selon l'une ou plusieurs des revendications 10 à 21, caractérisé en ce que la vanne à étranglement (114) est placée dans un boîtier de soupape (102) d'une soupape d'amortissement (30) dans le conduit d'écoulement (112) reliant une première chambre de pression (104) et une deuxième chambre de pression (106), un premier raccord (108) débouchant dans la première chambre de pression (104) et un deuxième raccord (110) débouchant dans la deuxième chambre de pression (106), les raccords (108, 110) et les chambres de pression (104, 106) étant disposés pour l'essentiel en alignement le long d'un axe longitudinal (120), et le conduit d'écoulement (112) sortant de la première chambre de pression (104) en direction d'un axe transversal (122) au moins approximativement perpendiculaire à l'axe longitudinal (120), étant coudé deux fois derrière la soupape à étranglement (114) placée sur l'axe transversal (122), à chaque fois d'au moins approximativement 90° pour revenir en direction de l'axe longitudinal (120) et débouchant dans la deuxième chambre de pression (106).

23. Système de suspension selon l'une ou plusieurs des revendications 10 à 22, caractérisé par une soupape de retenue (124) branchée en parallèle à la soupape à étranglement (114), agissant en sens inverse du point de vue de la direction d'écoulement, et de préférence également placée dans le boîtier de soupape (102) de la soupape d'amortissement (30).

24. Système de suspension selon la revendication 23, caractérisé en ce que la soupape de retenue (124) présente un élément de soupape (128) en forme de disque, coopérant avec un siège de soupape (126) et chargé dans la direction de fermeture par une force de précharge à effet de ressort tellement faible que, lors d'un écoulement hydraulique de la deuxième chambre de pression (106) vers la première chambre de pression (104), c'est pour l'essentiel sans effet d'étranglement qu'elle se ferme, et qu'elle s'ouvre pour une direction d'écoulement opposée.

25. Système de suspension selon la revendication 23 ou 24, caractérisé en ce que la soupape de retenue (124) est placée immédiatement entre la première et la deuxième chambre de pression (104, 106) sur l'axe longitudinal (120), de telle sorte que l'écoulement dans la soupape de retenue (124) se fait pour l'essentiel en ligne droite en direction de l'axe longitudinal (120).

26. Système de suspension selon l'une ou plusieurs des revendications 2 à 25, caractérisé en ce que le piston (8) de la jambe de force à ressort (2/4), à l'intérieur du cylindre (6), sépare un espace de

23

cylindre (12) porteur de charge, relié par la liaison (16, 18) au réservoir de ressort (20/22), d'un espace annulaire (14) entourant une tige de piston (10).

**27.** Système de suspension selon la revendication 26, caractérisé en ce que l'espace annulaire rempli d'agent hydraulique (14) est relié, de préférence indépendamment du point de vue hydraulique de l'espace de cylindre (12), à un réservoir de ressort séparé (24/26), une soupape d'amortissement (30/32) agissant dans la direction d'extension du ressort étant placée dans la liaison entre l'espace de cylindre (12) et le réservoir de ressort (20/22) correspondant, et une soupape d'amortissement (30a) agissant dans la direction de compression du ressort étant de préférence placée dans la liaison entre l'espace annulaire (14) et le réservoir de ressort (24/26) correspondant.

**28.** Système de suspension selon la revendication 26, caractérisé en ce que l'espace de cylindre (12) et l'espace annulaire (14) sont reliés au même réservoir de ressort (20/22), une soupape d'amortissement (30/32) agissant dans la direction d'extension du ressort étant placée entre l'espace de cylindre (12) et le réservoir de ressort (20/22), et de préférence une soupape d'amortissement (30a) agissant dans la direction de compression du ressort étant placée entre l'espace annulaire (14) et le réservoir de ressort (20/22).

**29.** Système de suspension selon l'une ou plusieurs des revendications 2 à 28, caractérisé en ce que le ou chaque réservoir de ressort (20/22 ; 24/26) est conformé en tant que convertisseur de pression à piston avec un piston de séparation (96) guidé par flottement et présentant deux surfaces de pression de tailles différentes, le piston de séparation (96) séparant un espace formant réservoir (98) relié hydrauliquement à la jambe de force à ressort (2/4) d'une chambre de ressort (99) contenant l'agent compressible, et la pression pneumatique à l'intérieur de la chambre de ressort (99) étant toujours plus faible que la pression hydraulique à l'intérieur de l'espace formant réservoir (98).

**30.** Système de suspension selon l'une ou plusieurs des revendications 1 à 29, caractérisé en ce que la jambe de force à ressort (2/4), en particulier son espace de cylindre (12), peut être reliée par l'intermédiaire de soupapes de commutation (212) au choix à une conduite de pression hydraulique (P) ou une conduite de réservoir (T), la conduite de réservoir (T) étant raccordée de préférence entre la jambe de force à ressort (2/4) et la soupape d'amortissement (30) et la conduite de pression (P) étant raccordée de préférence entre la soupape d'amortissement (30) et le réservoir de ressort correspondant (20/22).

**31.** Soupape d'amortissement (30/32), en particulier destinée à une utilisation dans un système de suspension selon l'une ou plusieurs des revendications précédentes, avec un élément de soupape (58, 116) disposé dans un conduit d'écoulement pour un agent hydraulique, caractérisé en ce que l'élément de soupape (58, 116) est conformé de telle manière et est placé de telle manière dans le conduit d'écoulement qu'il ouvre et referme en alternance et en permanence le conduit d'écoulement dans une direction d'écoulement de l'agent hydraulique.

**32.** Soupape d'amortissement selon la revendication 31, caractérisée en ce que la fermeture et l'ouverture est commandée automatiquement par deux pressions ($p_1$, $p_2$) agissant dans deux directions opposées sur l'élément de soupape (58, 116) ou par une différence de pression existant entre elles.

**33.** Soupape d'amortissement selon la revendication 31 ou 32, caractérisée en ce que l'élément de soupape (58, 116) est mobile entre une position de fermeture située sur le siège de soupape (118) et une position d'ouverture soulevée du siège de soupape (118), et une fente d'étranglement rétrécie (130) étant formée dans une zone située sur une face du corps de soupape (116) tournée dans la direction de fermeture, avec une section maximale telle qu'il apparaisse dans cette zone, à l'intérieur de l'agent s'écoulant à travers le conduit d'écoulement (112) dans la position ouverte du corps de soupape (116), une vitesse d'écoulement accrue et ainsi une réduction partielle de la pression, de telle sorte qu'ainsi le corps de soupape (116), pour des conditions de pression et de surface prédéterminées, est amené dans sa position de fermeture.

FIG.1

EP 0 515 991 B1

FIG.2

Federkraft

F

"stat.Kraft"

FIG.3

0

Ausfederung     Einfederung

Hub  s

statische
Lage

Federkraft

F

"stat.Kraft"

FIG.4

0

Ausfederung     Einfederung

Hub  s

statische
Lage

EP 0 515 991 B1

FIG.5

FIG.6

28

FIG.7

EP 0 515 991 B1

FIG.8

FIG.9

FIG.10

FIG.11

FIG.12